# EUROPEAN PATENT APPLICATION

(11) **EP 3 220 579 A1**
(43) Date of publication of application: **20.09.2017**
(21) Application number: 17160104.0
(22) Date of filing: 09.03.2017
(51) Int. Cl.: H04L 12/18, H04L 12/24

(54) **INFORMATION PROCESSING APPARATUS, SYSTEM AND METHOD OF PROCESSING**

(30) Priority: 17.03.2016 JP 2016054454
(71) Applicant: Ricoh Company, Ltd., Tokyo 143-8555 (JP)
(72) Inventor: KANDA, Tomoki, Tokyo, 143-8555 (JP); KATO, Yoshinaga, Tokyo, 143-8555 (JP)
(74) Representative: Schwabe - Sandmair - Marx

(57) **Abstract**

An electronic whiteboard that displays visual information on a display device depending on an input position on a screen, the electronic whiteboard includes a communication information storage unit configured to store communication information for communicating with another electronic whiteboard; an obtainment unit configured to communicate with the other electronic whiteboard by using the communication information, and to obtain a program providing a function of the electronic whiteboard, and a common introduction program common to models of the electronic whiteboard for introducing the program; and an introduction unit configured to execute the common introduction program, and to introduce the program in the electronic whiteboard.

## Description

### BACKGROUND OF THE INVENTION

### 1. Field of the Invention

The present disclosure relates to an information processing apparatus, a system, and a method of processing.

### 2. Description of the Related Art

Electronic whiteboards have been known that have touch panels installed on large flat panel displays. An electronic whiteboard displays a screen having a role of a whiteboard or a blackboard, takes in a trajectory of an electronic pen or a finger via a touch panel, and draws the trajectory on the screen as handwritten data. Therefore, the user can use the screen as a whiteboard or a blackboard. Also, an electronic whiteboard that can be connected to a personal computer (PC) can display the same screen as displayed on the PC so as to be superimposed and drawn with the handwritten data, and can operate the PC based on information input via the touch panel on the electronic whiteboard.

Also, it has become possible for the administrator to perform the setting about operations of electronic whiteboards, such as settings about security, on respective electronic whiteboards. On the other hand, when a considerable number of electronic whiteboards are introduced in a company and the like, administrators in such a company have to perform the same settings on the respective electronic whiteboards, which is inconvenient in terms of the heavy workload of the administrators.

Conventionally, technologies have been known for efficiently performing the same settings on multiple devices (see, for example, Patent document 1). Patent document 1 discloses a network synchronization system in which a first apparatus includes a shared storage unit for synchronization to copy and store personal setting information for each user; and a second apparatus includes a setting information unit to store the personal setting information for each user, and a synchronization control unit to update the personal setting information for each user stored in the setting information unit, to the latest personal setting information for each user. The synchronization control unit obtains common update information among multiple information processing apparatuses stored in the shared storage unit for synchronization.

However, the technology described in Patent document 1 has a problem; versions of a program are not taken into consideration when the second apparatus makes the personal setting information synchronize with the first apparatus. Programs for implementing various types of functions run on electronic whiteboards, and versions of the programs are often upgraded by the manufacturers for adding or correcting the functions. Administrators of electronic whiteboards may obtain an upgraded version of a program to install it on the electronic whiteboards. However, if different versions of the program are used, the setting information relating to operations of the electronic whiteboards may also be different. Therefore, it is preferable that the versions of the program on the multiple electronic whiteboards are the same for having the setting information synchronized.

Thereupon, it may be considered to upgrade the version of the program on the electronic whiteboards if necessary (if the versions are different) before synchronizing the setting information. For executing a version upgrade, a dedicated program called an "installer" is often used. The installer and the program may be provided in a single package or the like. If one of the electronic whiteboards having specific setting information has obtained the latest package, the other electronic whiteboards may obtain this package to install the program, and then, can make setting information synchronize with the first one.

However, electronic whiteboards may be of different models that are specific to OSes and the like to be used, and if the models are different, the installers may also be different. This may cause a problem in that, for example, if the models are different between an electronic whiteboard having setting information and another electronic whiteboard going to obtain the setting information, the other electronic whiteboard going to obtain the setting information may not be able to upgrade the version even if the other electronic whiteboard has downloaded an installer.

In view of the above problem, it is an object of an embodiment in the present disclosure to provide an electronic whiteboard that can make settings synchronize, taking the version of a program into consideration.

### SUMMARY OF THE INVENTION

According to an embodiment, an electronic whiteboard that displays visual information on a display device depending on an input position on a screen, the electronic whiteboard includes a communication information storage unit configured to store communication information for communicating with another electronic whiteboard; an obtainment unit configured to communicate with the other electronic whiteboard by using the communication information, and to obtain a program providing a function of the electronic whiteboard, and a common introduction program common to models of the electronic whiteboard for introducing the program; and an introduction unit configured to execute the common introduction program, and to introduce the program in the electronic whiteboard.

It is possible to provide an electronic whiteboard that can make settings synchronize, taking the version of a program into consideration.

### BRIEF DESCRIPTION OF DRAWINGS

FIGs. 1A-1B are an example of diagrams illustrating a network structure of an image processing system;
FIG. 2 is an example of a diagram schematically illustrating synchronization of setting information taking versions of a program into consideration;
FIG. 3 is an example of a configuration diagram of an entire image processing system;
FIG. 4 is an example of a hardware configuration diagram of an electronic whiteboard;
FIG. 5 is an example of a functional block diagram of an electronic whiteboard;
FIG. 6 is an example of a functional block diagram of a file processing unit;
FIG. 7 is an example of a functional block diagram of a server unit and a client unit;
FIG. 8 is an example of a configuration diagram of image layers;
FIG. 9 is an example of a sequence chart illustrating processes of electronic whiteboards;
FIG. 10 is an example of a sequence chart illustrating processes of electronic whiteboards;
FIGs. 11A-11E are an example of diagrams illustrating installers;
FIG. 12 is an example of a diagram illustrating a relationship between a filename of a program file and an installer included in the program file;
FIG. 13 is an example of a diagram illustrating a network structure of an image processing system;
FIG. 14 is an example of a diagram illustrating an overview of functions operating on a parent unit, child units, and grandchild units;
FIG. 15 is an example of a hardware configuration diagram of a setting administrator PC;
FIG. 16 is an example of a detailed functional block diagram of a program providing unit and a program management unit;
FIG. 17 is an example of a detailed functional block diagram of a setting obtainment unit and a setting providing unit;
FIGs. 18A-18B are examples of a diagram illustrating a setting information setting screen, and a system setting screen;
FIG. 19 is a diagram illustrating an example of a communication information setting screen;
FIG. 20 is an example of a sequence chart illustrating steps for synchronizing a new version of a program in an image processing system;
z is an example of a flowchart illustrating detailed steps for upgrading a version of a program by an electronic whiteboard other than a parent unit;
FIG. 22 is an example of a diagram illustrating a process executed by an electronic whiteboard after activation;
FIG. 23 is an example of a flowchart illustrating steps for selecting an installer;
FIG. 24 is a diagram illustrating an example of a dialogue displayed on a display if a "dialogue" setting is set on a system setting screen;
FIG. 25 is an example of a sequence chart illustrating steps for synchronizing setting information by an image processing system;
FIG. 26 is an example of a flowchart illustrating steps for updating setting information by an electronic whiteboard immediately below;
FIGs. 27A-27B are diagrams illustrating an example of a setting information setting screen, and an example of an error code displayed on a display of an electronic whiteboard, respectively;
FIG. 28 is a diagram illustrating an example of models of a parent unit, a child unit, and a grandchild unit; and
FIG. 29 is an example of a flowchart illustrating steps for having a parent unit display a request for a common installer.

### DETAILED DESCRIPTION OF THE EMBODIMENTS

In the following, embodiments of an electronic whiteboard and a method of processing executed by the electronic whiteboard will be described with reference to the drawings.

### <Network structure of embodiments>

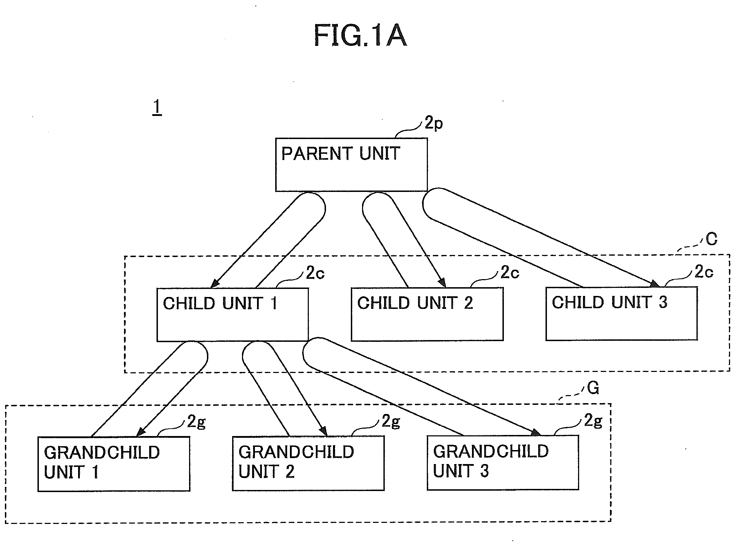

FIG. 1A is an example of a diagram illustrating a network structure of an image processing system 1 in the embodiment. The image processing system 1 has a network structure of a tree structure. In other words, multiple electronic whiteboards 2 form a hierarchical structure having layers. A tree structure is a type of a hierarchical structure in which branching is repeated from a node (an electronic whiteboard 2) to nodes (electronic whiteboards 2).

In the embodiment, each child unit 1 to 3 (having a reference symbol 2c) starts communication with a parent unit 2p, and the child unit 1 obtains setting information held by the parent unit 2p, to set the setting information in the child unit 1. This is the same for the child units 2 and 3. Also, each grandchild unit 1 to 3 (having a reference symbol 2g) starts communication with the child unit 1, and the grandchild unit 1 obtains the setting information held by the child unit 1, to set the setting information in the grandchild unit 1. This is the same for the grandchild units 2 and 3.

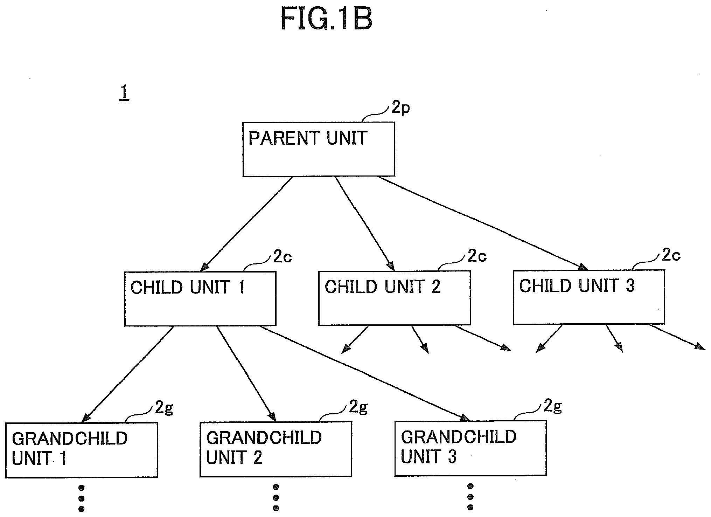

FIG. 1B is a diagram illustrating a comparative example compared with the network structure in the embodiment. In FIG. 1B, the parent unit 2p sets the setting information in the child units 1-3, and the child unit 1 sets the setting information in the grandchild units 2g. With such a configuration, the parent unit 2p has to set the setting information in the child units 1 to 3, the child unit 1 has to set the setting information in the grandchild units 1 to 3, and hence, a higher workload is imposed on an electronic whiteboard 2.

On the other hand, by the synchronization method in the embodiment illustrated in FIG. 1A, an electronic whiteboard 2 needs to communicate only with the electronic whiteboard 2 immediately above viewed from itself, and just to obtain the setting information. Therefore, the workload is controlled for each electronic whiteboard 2 to have the setting information synchronized. Also, each electronic whiteboard 2 does not need to have information about updating the setting information of an electronic whiteboard immediately below viewed from itself. Also, since the electronic whiteboard 2 immediately above that provides the setting information just needs to execute a process with a comparatively low workload to transmit the setting information in response to a request from an electronic whiteboard 2 immediately below, and hence, can have multiple electronic whiteboards 2 immediately below (three units in the figure). In other words, it is not necessary to connect electronic whiteboards 2 in series (daisy chaining). Thus, all the electronic whiteboards 2 can have the setting information synchronized, with a comparatively small workload, and within a comparatively short time.

### <Consideration of versions of program>

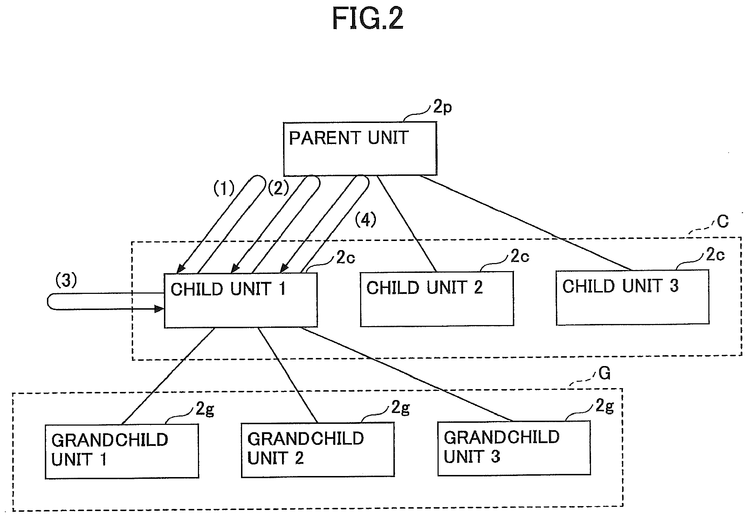

FIG. 2 is an example of a diagram schematically illustrating synchronization of setting information taking versions of a program into consideration. Steps for synchronization will be briefly described, focusing on an electronic whiteboard 2 being the child unit 1 (a child unit 2c) in FIG. 2.
(1) The electronic whiteboard 2 checks whether the version of a program is the same as that of the electronic whiteboard 2 immediately above before synchronizing the setting information.
(2) If the versions are different, the electronic whiteboard 2 downloads a file including the program and an installer from the electronic whiteboard 2 immediately above, and determines whether the installer is a common installer or the same installer as the installer in itself. A "common installer" is an installer that operates regardless of the models of the electronic whiteboard 2.
(3) If the installer is a common installer or the same installer as the installer in itself, the electronic whiteboard 2 installs the program downloaded from the parent unit 2p (upgrades the version).
(4) If the version of the program is the same as that in the parent unit 2p, or becomes the same by installation, the electronic whiteboard 2 synchronizes the setting information with the electronic whiteboard 2 immediately above.

Therefore, even if the version of the program is different from that of the electronic whiteboard 2 immediately above, and the model of the electronic whiteboard 2 is different from that of the electronic whiteboard 2 immediately above, the electronic whiteboard 2 in the embodiment can upgrade a program as long as the electronic whiteboard 2 immediately above has a common installer. Even if the electronic whiteboard 2 immediately above has the setting information that includes a different item due to a version difference of the program, the electronic whiteboard 2 immediately below can have the setting information synchronized.

Also, according to the image processing system 1 in the embodiment, even if models of electronic whiteboards 2 are different, the setting information as well as the version of the program can be synchronized. Therefore, the administrator or the like just needs to set a common installer in a parent unit, to have all electronic whiteboards 2 upgrade the version of a program even if different models coexist.

### <About terms>

Here, a "program" means steps about operations of a computer, and information to be processed by the computer. A program is treated as a type of what-is-called "software", or equivalent to software. A program is information commanding functions to be implemented on the electronic whiteboard 2 in a language that can be decoded by a computer, and may be considered as information about functional command description. Such information may be specifically referred to as an application program, firmware, or an OS (Operating System), but not limited to these.

Also, it is often the case that multiple programs, for example, an OS and an application program, run on an electronic whiteboard 2. In the embodiment, version upgrade may be done for all programs without distinguishing multiple programs, or may be done for a part of the programs.

Also, "introducing a program" means a process and/or a job that make the program ready to be used on a computer (an electronic whiteboard 2). Instead of "introducing", other terms such as "building into", "setting", and "installing" may be used. In the embodiment, the term "installing" will be mainly used.

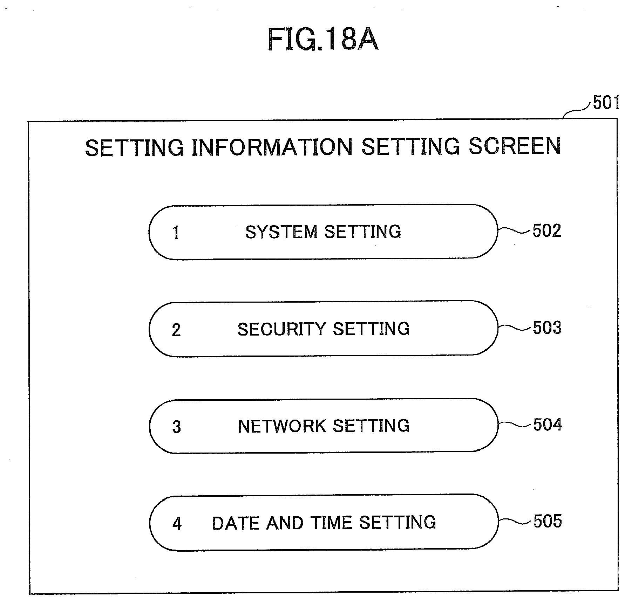

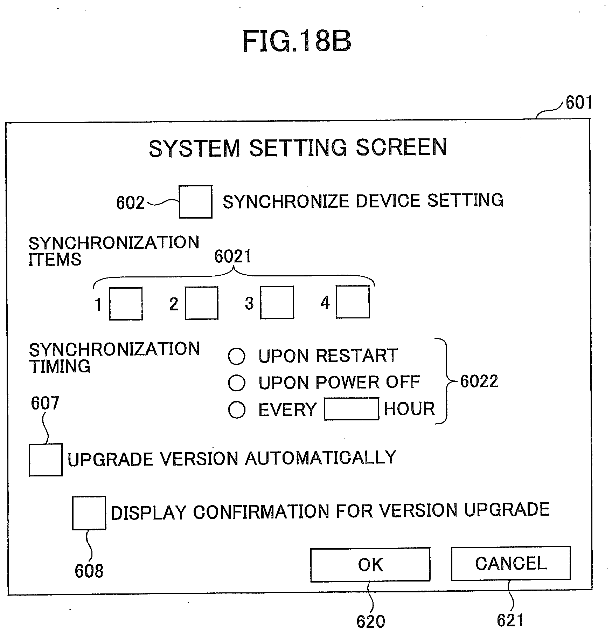

Also, "setting information" means settings about operations of an electronic whiteboard 2. The "setting information" for an electronic whiteboard 2 includes, for example, a setting for an appropriate operation, a setting for permitting or restricting an operation of the electronic whiteboard 2, a setting of on and off of each function, and a setting for communicating with the Internet or another device via a network. Specific contents of the setting information will be described with FIG. 18 and the like.

It is preferable that the network structure of the tree structure has three or more layers, but two layers may be feasible. Here, "three or more layers" mean that the undermost layer is the third layer or greater, and a branch may exist at the second layer or lesser. Also, the number of electronic whiteboards 2 at one layer is not limited to three; the number of electronic whiteboards 2 at one layer is appropriately determined by taking the total number of electronic whiteboards 2 and the depth of the hierarchy into consideration.

For the sake of description in the following, the layer of the child units 1 to 3 will be referred to as the "child unit layer C", and the layer of the grandchild units 1 to 3 will be referred to as the "grandchild unit layer G". Also, an "electronic whiteboard 2 immediately above" is an electronic whiteboard 2 immediately above another electronic whiteboard 2, such as the parent unit 2p viewed from the child unit 1, and an "electronic whiteboard 2 immediately below" is an electronic whiteboard 2 immediately below another electronic whiteboard 2, such as the child unit 1 viewed from the parent unit 2p.

Also, "electronic whiteboards 2 relatively lower" are electronic whiteboards 2 positioned lower than another electronic whiteboard 2, for example, the child units 1 to 3 and the grandchild units 1 to 3 viewed from the parent unit 2p. Also, "electronic whiteboards 2 relatively upper" are electronic whiteboards 2 positioned upper than another electronic whiteboard 2, for example, the child unit 1 and the parent unit 2p viewed from the grandchild unit 1.

### <System overview>

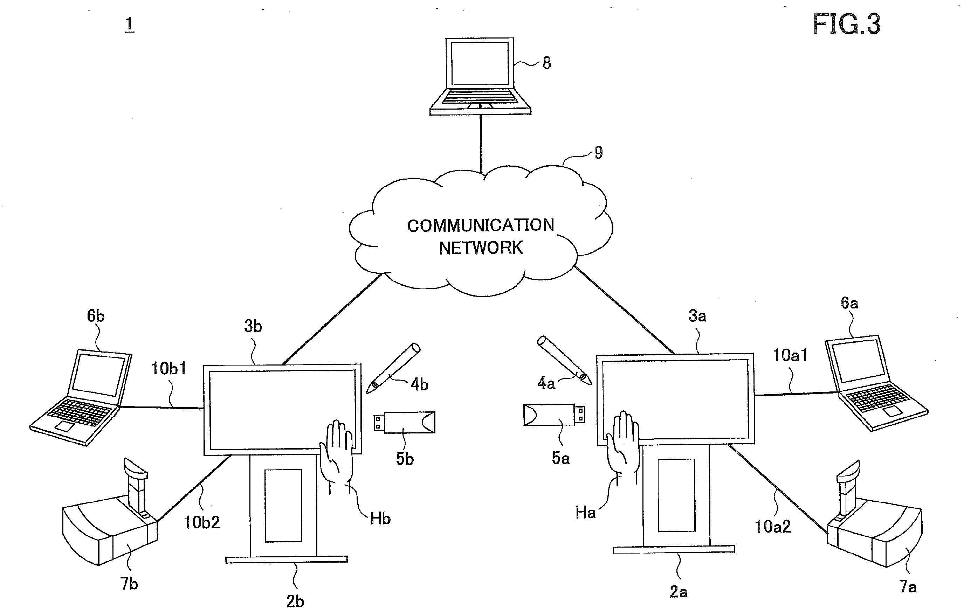

FIG. 3 is a configuration diagram of an entire image processing system 1 according to the embodiment. Note that in FIG. 3, just two units of electronic whiteboards 2a and 2b, accompanying electronic pens 4a and 4b, and the like are illustrated to simplify the description. However, three or more units of electronic whiteboards 2, electronic pens, and the like may be used. As illustrated in FIG. 3, the image processing system 1 includes multiple electronic whiteboards 2a and 2b, multiple electronic pens 4a and 4b, USB memories 5a and 5b, note PCs 6a and 6b, video conference terminals 7a and 7b, and a PC 8. Also, the electronic whiteboards 2a and 2b, and the PC 8 are connected to be capable of communicating with each other via a communication network 9. Further, the multiple electronic whiteboards 2a and 2b include displays 3a and 3b, respectively.

Also, the electronic whiteboard 2a can have the display 3a display an image drawn by events generated by the electronic pen 4a (touches on the display 3a by the pen point of the electronic pen 4a or the pen tail of the electronic pen 4a). Note that the image displayed on the display 3a can be changed based on events generated by not only the electronic pen 4a, but also a user's hand Ha or the like (gestures for magnification, reduction, page turning, and the like).

Also, the USB memory 5a can be connected with the electronic whiteboard 2a so that the electronic whiteboard 2a can read an electronic file such as a PDF (Portable Document Format) file from the USB memory 5a, and the electronic whiteboard 2a can record an electronic file on the USB memory 5a. Also, the note PC 6a is connected with the electronic whiteboard 2a via a cable 10a1 that is capable of communication by standards such as Display Port (registered trademark), DVI (Digital Visual Interface), HDMI (High-Definition Multimedia Interface, registered trademark), VGA (Video Graphics Array), and the like. Then, when an event is generated by a contact on the display 3a, the electronic whiteboard 2a transmits event information representing the event to the note PC 6a in the same way as done for events on an input unit such as a mouse and a keyboard. Similarly, the video conference terminal 7a is connected to the electronic whiteboard 2a via a cable 10a2 that is capable of communication by the standards. Note that the note PC 6a and the video conference terminal 7a may communicate with the electronic whiteboard 2a via wireless communication compliant with various wireless communication protocols such as Bluetooth (registered trademark).

At another site where the electronic whiteboard 2b is installed, the electronic whiteboard 2b having the display 3b, the electronic pen 4b, the USB memory 5b, the note PC 6b, the video conference terminal 7b, a cable 10b1, and the cable 10b2 are used similarly as above. In addition, an image displayed on the display 3b can be changed based on events generated by a user's hand Hb or the like.

Thus, an image drawn on the display 3a of the electronic whiteboard 2a at the one site is displayed on the display 3b of the electronic whiteboard 2b at the other site. Conversely, an image drawn on the display 3b of the electronic whiteboard 2b at the other site is displayed on the display 3a of the electronic whiteboard 2a at the one site. In this way, a remote sharing process for sharing the same image at remote locations can be executed with the image processing system 1. Therefore, by using the system, a conference between remote locations can be held very conveniently.

Note that in the following, an arbitrary one of the electronic whiteboards will be referred to as an "electronic whiteboard 2". An arbitrary one of the displays will be referred to as a "display 3". An arbitrary one of the electronic pens will be referred to as an "electronic pen 4". An arbitrary one of the USB memories will be referred to as a "USB memory 5". An arbitrary one of the note PCs will be referred to as a "note PC 6". An arbitrary one of the video conference terminals will be referred to as a "video conference terminal 7". Also, an arbitrary one of the hands of users will be referred to as a "hand H". An arbitrary one of the cables will be referred to as a "cable 10". Also, although an electronic whiteboard will be described in the embodiment as an example of an image processing apparatus, the image processing apparatus is not limited to that; other examples of the image processing apparatus include an electronic signboard (a digital signage), a telestrator used for sports and weather forecast, and a remote image (video) diagnostic device. Also, although the note PC 6 will be described as an example of an information processing terminal, the information processing terminal is not limited to that; other examples of the information processing terminal include a desktop PC, a tablet PC, a PDA, a digital video camera, a digital camera, a game machine, and any other terminals with which an image frame can be provided. Further, the communication network includes the Internet, a LAN (Local Area Network), and a cellular phone communication network. Also, although the USB memory 5 will be described as an example of a recording medium, the recording medium is not limited to that; other examples of the recording medium include an SD card and various recording media.

### <Hardware configuration of electronic whiteboard>

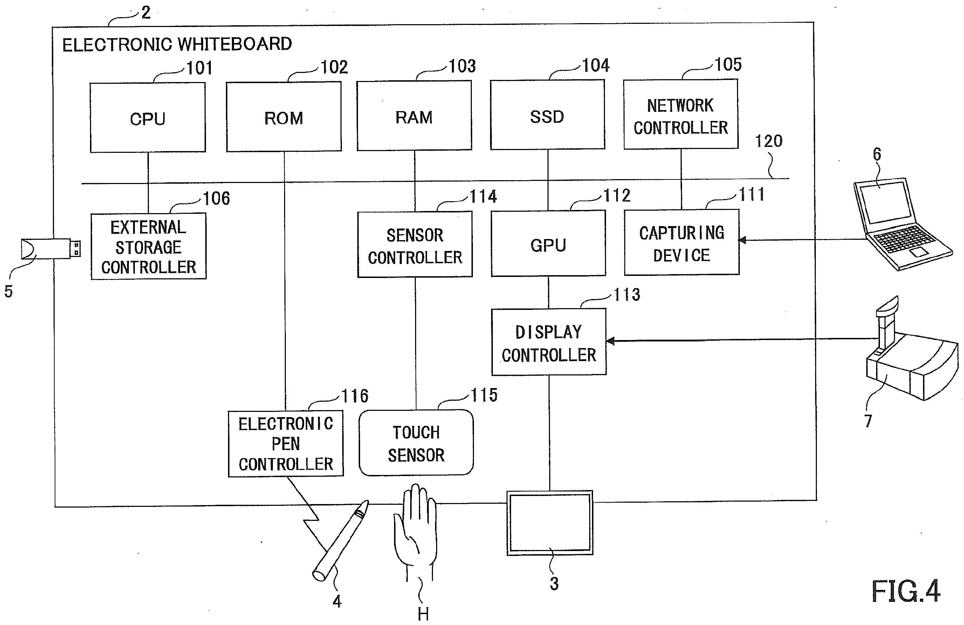

Next, by using FIG. 4, a hardware configuration of the electronic whiteboard 2 in the embodiment will be described. Note that FIG. 4 is a hardware configuration diagram of the electronic whiteboard 2.

As illustrated in FIG. 4, the electronic whiteboard 2 includes a CPU (Central Processing Unit) 101 to control the overall behavior of the electronic whiteboard 2; a ROM (Read-Only Memory) 102 to store programs to be used for driving the CPU 101, such as an IPL (Initial Program Loader); a RAM (Random Access Memory) 103 used as a work area for the CPU 101; an SSD (Solid State Drive) 104 to store various data items of a program for the electronic whiteboard 2 and the like; a network controller 105 to control communication with the communication network 9; and an external storage controller 106 to control communication with the USB memory 5.

The electronic whiteboard 2 also includes a capturing device 111 for displaying a still picture or a moving picture on a display of the note PC 6; a GPU (Graphics Processing Unit) 112 dedicated to processing graphics; and a display controller 113 to control and manage a screen display to output an image output from the GPU 112 to the display 3 and the video conference terminal 7.

The electronic whiteboard 2 further includes a sensor controller 114 to control a process of a touch sensor 115, and the touch sensor 115 to detect a contact of the electronic pen 4 or the user's hand H on the display 3. This touch sensor 115 receives coordinates as input by an infrared cut-off method, and detects the coordinates. This method of inputting coordinates and detecting coordinates is a method in which two light reception/emission devices disposed at both ends on the upper side of the display 3, emit multiple infrared rays parallel to the display 3, and receive the light that is reflected by a reflecting member disposed around the display 3, and comes back via the same light path as the light emitted by light reception elements has gone via. The touch sensor 115 outputs IDs (Identifications) of the infrared rays that have been emitted by the two light reception/emission devices, and cut off by an object, to the sensor controller 114, and the sensor controller 114 identifies a coordinate position which is a contact position of the object. Note that all IDs described in the following are examples of identification information.

The touch sensor 115 is not limited to such an infrared cut-off method, but various detection units may be used including a touch panel of an electrostatic capacitance type that identifies a contact position by detecting a change of the electrostatic capacitance; a touch panel of a resistance film method to identify a contact position by a voltage change of two resistor films facing each other; and a touch panel of an electromagnetic induction type to identify a contact position by detecting electromagnetic induction generated by a contact object contacting a display unit. The electronic whiteboard 2 also includes an electronic pen controller 116. This electronic pen controller 116 communicates with the electronic pen 4, to determine whether there is a touch by the pen point or a touch by the pen tail on the display 3. Note that the electronic pen controller 116 may determine whether there is a touch not only by the pen point or the pen tail, but also by a part of the electronic pen 4 gripped by the user, or another part of the electronic pen. The electronic whiteboard 2 further includes a bus line 120 including an address bus, a data bus, and the like to electrically connect the CPU 101, the ROM 102, the RAM 103, the SSD 104, the network controller 105, the external storage controller 106, the capturing device 111, the GPU 112, the sensor controller 114, and the electronic pen controller 116 as illustrated in FIG. 4.

Note that the program for the electronic whiteboard 2 may be recorded on recording media readable by computers such as CD-ROMs to be distributed.

### <Functional configuration of electronic whiteboard>

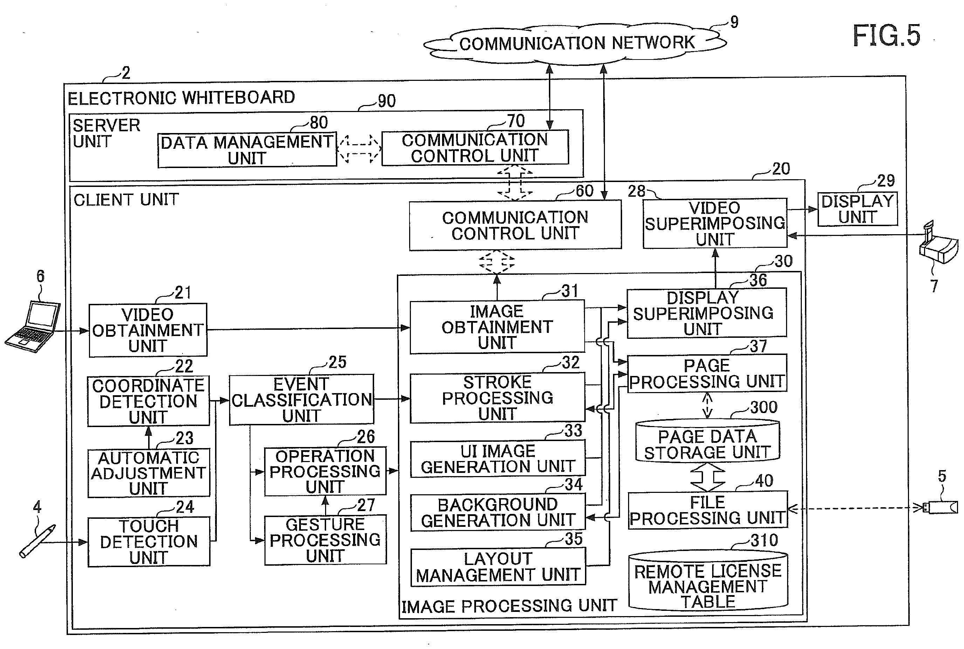

Next, a functional configuration of the electronic whiteboard 2 will be described using FIG. 5 to FIG. 8. First, an entire functional configuration of the electronic whiteboard 2 will be described using FIG. 5. FIG. 5 is a functional block diagram of the electronic whiteboard 2.

The electronic whiteboard 2 includes functional units illustrated in FIG. 5 that are implemented by the hardware configuration illustrated in FIG. 4 and programs. The electronic whiteboard 2 may serve as a "host device" that initiates a remote sharing process, or may serve as a "participating device" that later participates a remote sharing process having been started already. Also, the electronic whiteboard 2 is constituted with two major units, namely, a client unit 20 and a server unit 90. The client unit 20 and the server unit 90 are functional units that are implemented in the housing of a single unit of the electronic whiteboard 2. If the electronic whiteboard 2 serves as the host device, the client unit 20 and the server unit 90 operate on this electronic whiteboard 2. On the other hand, if the electronic whiteboard 2 serves as the participating device, the client unit 20 operates on this electronic whiteboard 2, but the server unit 90 does not operate. In other words, in FIG. 3, if the electronic whiteboard 2a serves as the host device, and the electronic whiteboard 2b serves as the participating device, the client unit 20 of the electronic whiteboard 2a communicates with the client unit 20 of the electronic whiteboard 2b on the other end via the server unit 90 implemented in the electronic whiteboard 2a on the same end. On the other hand, the client unit 20 of the electronic whiteboard 2b communicates with the client unit 20 of the electronic whiteboard 2a on the other end via the server unit 90 implemented in the electronic whiteboard 2a on the other end.

### [Functional configuration of client unit 20]

Next, a functional configuration of the client unit 20 will be described by mainly using FIG. 5 to FIG. 7. The client unit 20 includes a video obtainment unit 21, a coordinate detection unit 22, an automatic adjustment unit 23, a touch detection unit 24, an event classification unit 25, an operation processing unit 26, a gesture processing unit 27, a video superimposing unit 28, an image processing unit 30, and a communication control unit 60.

Among these, the video obtainment unit 21 obtains an output image of a video output device connected by the cable 10. In response to receiving an image signal from the video output device, the video obtainment unit 21 analyzes this image signal to derive the resolution of an image frame, which is a display image formed by the video output device with this image signal, and image information about the update frequency of this image frame, and outputs the derived information to an image obtainment unit 31.

The coordinate detection unit 22 detects the coordinate position (input position) of an event generated by a user on the display 3 such as a touch operation by the user's hand H on the display 3 or the like. Also, the coordinate detection unit 22 detects the area of a touched part.

The automatic adjustment unit 23 is activated when the electronic whiteboard 2 is activated (or reactivated), to adjust parameters used when the coordinate detection unit 22, which detects coordinates by an optical sensor method, processes an image of a sensor camera so that the coordinate detection unit 22 can output appropriate values.

The touch detection unit 24 detects an event generated by the user, such as a pressing (touching) operation on the display 3 by the pen point of the electronic pen 4 or the pen tail of the electronic pen 4.

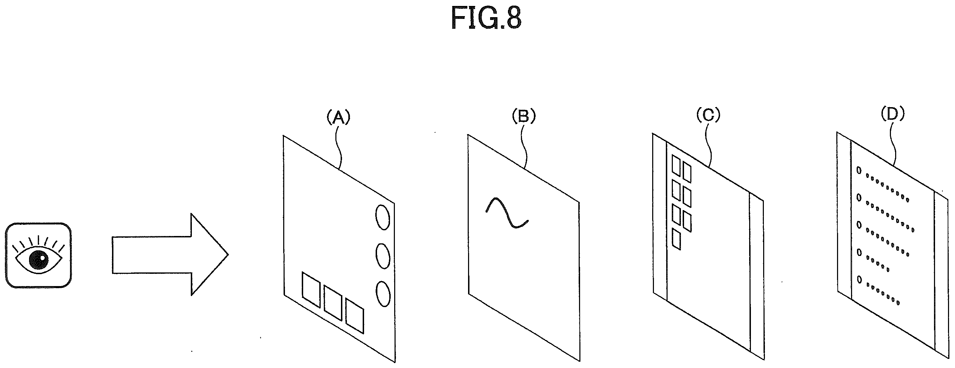

The event classification unit 25 classifies the coordinate position of an event detected by the coordinate detection unit 22, and a detection result detected by the touch detection unit 24, into one of the events among a stroke drawing, a UI operation, and a gesture operation. Here, the "stroke drawing" is an event generated when a stroke image (B) illustrated in FIG. 8, which will be described later, is displayed on the display 3 by the user who presses the display 3 by the electronic pen 4, moves the electronic pen 4 while keeping the pressing state, and eventually detaches the electronic pen 4 from the display 3. By this stroke drawing, for example, a letter of the alphabet such as "S" or "T" is drawn on the display 3. Note that this "stroke drawing" includes not only drawing an image, but also an event of deleting an image that has been drawn already, and editing an image that has been drawn.

The "UI operation" is an event generated when a UI image (A), which will be described later, illustrated in FIG. 8, is displayed on the display 3 by the user who presses a predetermined position by the electronic pen 4 or the hand H. By this UI operation, for example, the color and the width of a line drawn by the electronic pen 4 are set.

The "gesture operation" is an event generated when a stroke image (B), which will be described later, illustrated in FIG. 8, is displayed on the display 3 by the user who touches the display 3 by the hand H, or moves the hand H on the display 3. By this gesture operation, for example, the user can enlarge (or reduce) an image, change a display area, or switch a page, by moving the hand H in a state where the hand H is kept touching on the display 3.

For a UI operation determined by the event classification unit 25, the operation processing unit 26 executes various operations following elements of the UI generated with the event. The elements of a UI may include, for example, a button, a list, a checkbox, and a text box. The gesture processing unit 27 executes an operation that corresponds to a gesture operation determined by the event classification unit 25.

The video superimposing unit 28 displays a video having an image superimposed by a display superimposing unit 36, which will be described later, on a display unit 29. The display unit 29 corresponds to display functions implemented on the display 3. Also, the video superimposing unit 28 displays a video transmitted from a video output device (the video conference terminal 7 or the like), on a video from another video output device (the note PC 6 or the like) by picture-in-picture. Further, the video superimposing unit 28 executes switching for a video displayed on a part of the display unit 29 by picture-in-picture, to be displayed on the entire screen of the display unit 29.

The image processing unit 30 executes a process for superimposing image layers as illustrated in FIG. 8. This image processing unit 30 includes the image obtainment unit 31, a stroke processing unit 32, a UI image generation unit 33, a background generation unit 34, a layout management unit 35, the display superimposing unit 36, a page processing unit 37, a file processing unit 40, a page data storage unit 300, and a remote license management table 310.

Among these, the image obtainment unit 31 obtains, as images, frames in a video obtained by the video obtainment unit 21. The image obtainment unit 31 outputs data of these images to the page processing unit 37. This image corresponds to an output image (C) from a video output device (the note PC 6 or the like) illustrated in FIG. 8.

The stroke processing unit 32 draws an image, deletes a drawn image, or edits a drawn image, based on an event relating to a stroke drawing classified by the event classification unit 25. Such an image by a stroke drawing corresponds to a stroke image (B) illustrated in FIG. 8. Also, results of drawing, deleting, and editing images based on these stroke drawings are stored in an operational data storage unit 840 as operation data, which will be described later.

The UI image generation unit 33 generates a UI (user interface) image set in the electronic whiteboard 2 in advance. Such a UI image corresponds to a UI image (A) illustrated in FIG. 8. The background generation unit 34 receives media data among page data read from the page data storage unit 300 by the page processing unit 37, from the page processing unit 37. The background generation unit 34 outputs this received media data to the display superimposing unit 36. Also, the image by this media data corresponds to a background image (D) illustrated in FIG. 8. The pattern of the background image (D) may be a solid color, grid display, or the like.

The layout management unit 35 manages layout information that represents a layout of images output from the image obtainment unit 31, the stroke processing unit 32, the UI image generation unit 33, and the background generation unit 34, respectively, for the display superimposing unit 36. This makes it possible for the layout management unit 35 to issue a command to the display superimposing unit 36 about whether to display an output image (C) and a stroke image (B) or not to display, and if to display, positions in a UI image (A) and a background image (D).

Based on layout information output from the layout management unit 35, the display superimposing unit 36 lays out images output from the image obtainment unit 31, the stroke processing unit 32, and the UI image generation unit 33 (the background generation unit 34).

The page processing unit 37 aggregates data of the stroke image (B) and data of the output image (C) into single page data, and stores as the single page data in the page data storage unit 300. Data of a stroke image (B) constitutes a part of page data as stroke array data (stroke data items) represented by a stroke array data ID illustrated in Table 1. Data of an output image (C) constitutes a part of page data as media data represented by a media data ID illustrated in Table 1. Once read from the page data storage unit 300, this media data is treated as data of a background image (D).

Also, the page processing unit 37 transmits the media data among the page data stored once, to the display superimposing unit 36 via the background generation unit 34 so that the video superimposing unit 28 can redisplay the background image (D) on the display 3. Also, the page processing unit 37 puts the stroke array data (stroke data items) among the page data back to the stroke processing unit 32 so as to put the strokes into a state in which editing can be done again. Further, the page processing unit 37 can delete or copy the page data.

In other words, data of the output image (C) displayed on the display 3 at the moment when the page processing unit 37 stores the page data in the page data storage unit 300, is first stored in the page data storage unit 300, and then, read out as media data that represents the background image (D) when read out from the page data storage unit 300. Then, among items of the page data read from the page data storage unit 300, the page processing unit 37 outputs the stroke array data that represents the stroke image (B) to the stroke processing unit 32. Also, among the items of the page data read from the page data storage unit 300, the page processing unit 37 outputs the media data that represents the background image (D) to the background generation unit 34.

The display superimposing unit 36 superimposes the output image (C) from the image obtainment unit 31, the stroke image (B) from the stroke processing unit 32, the UI image (A) from the UI image generation unit 33, and the background image (D) from the background generation unit 34, following the layout specified by the layout management unit 35. Thus, as illustrated in FIG. 8, the layers are in the sequence of the UI image (A), the stroke image (B), the output image (C), and the background image (D), and the user can see the superimposed images by this sequence.

Also, the display superimposing unit 36 can switch the superimposing for the image (C) and the image (D) illustrated in FIG. 8, so that one of the images (C) and (D) is exclusively superimposed on the image (A) and the image (B). For example, in a state where the image (A), the image (B), and the image (C) are displayed at first, if the cable 10 between the electronic whiteboard 2 and a video output device (the note PC 6 or the like) is pulled out, the layout management unit 35 may specify the image (C) as not to be superimposed, and to display the image (D). In this case, the display superimposing unit 36 may also execute processes for enlarging the display, reducing the display, and moving the display area.

The page data storage unit 300 stores page data as illustrated in Table 1.

**[Table 1]**

| PAGE DATA ID | START TIME | FINISH TIME | STROKE ARRAY DATA ID | MEDIA DATA ID |
|---|---|---|---|---|
| p001 | 20130610102434 | 20130610102802 | st001 | m001 |
| p002 | 20130610102815 | 20130610103225 | st002 | m002 |
| p003 | 20130610103545 | 20130610104233 | st003 | m003 |
| ⋮ | ⋮ | ⋮ | ⋮ | ⋮ |

Table 1 schematically illustrates page data. The page data is data of one page to be displayed on the display 3 (stroke array data (stroke data items) and media data). Note that since the page data includes a lot of parameter types, here, contents of the page data are separated into Table 1 to Table 4 for the description.

As illustrated in Table 1, the page data includes the page data ID to identify a page; the start time that represents a time when displaying the page has been started; the finish time that represents a time when rewriting the content of the page by a stroke, a gesture, and the like has been finished; the stroke array data ID to identify stroke array data generated by strokes with the electronic pen 4 and the user's hand H; and the media data ID to identify media data, which are associated with each other. The stroke array data is data for displaying the stroke image (B) illustrated in FIG. 8, on the display 3. The media data is data for displaying the background image (D) illustrated in FIG. 8, on the display 3.

By the page data as such, for example, if the user draws a letter "S" of the alphabet by the electronic pen 4, it is a one-stroke drawing, and hence, the single letter "S" of the alphabet is represented by a single stroke data ID. On the other hand, if the user draws a letter "T" of the alphabet by the electronic pen 4, it is a two-stroke drawing, and hence, the single letter "T" of the alphabet is represented by two stroke data IDs.

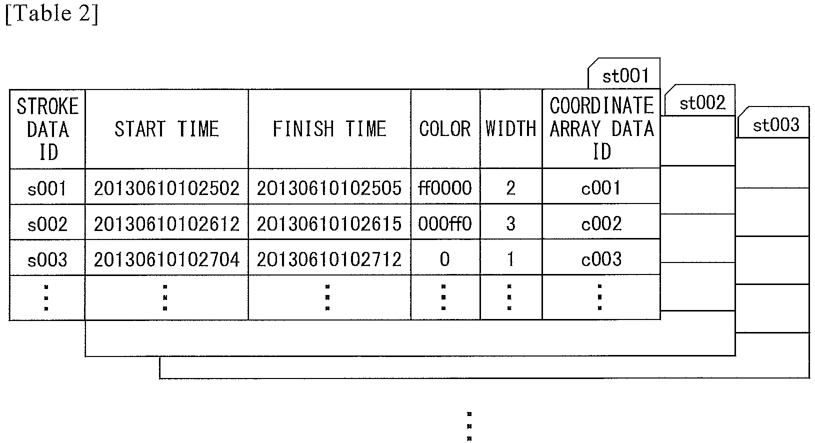

The stroke array data also includes detailed information as illustrated in Table 2. Table 2 schematically illustrates the stroke array data. As illustrated in Table 2, a chunk of stroke array data is represented by multiple records of stroke data. A record of stroke data includes the stroke data ID to identify the record of stroke data; the start time that represents a time when a corresponding stroke has been started to be written; the finish time that represents a time when the stroke writing has been completed; the stroke color; the stroke width; and the coordinate array data ID to identify an array of passing points of the stroke.

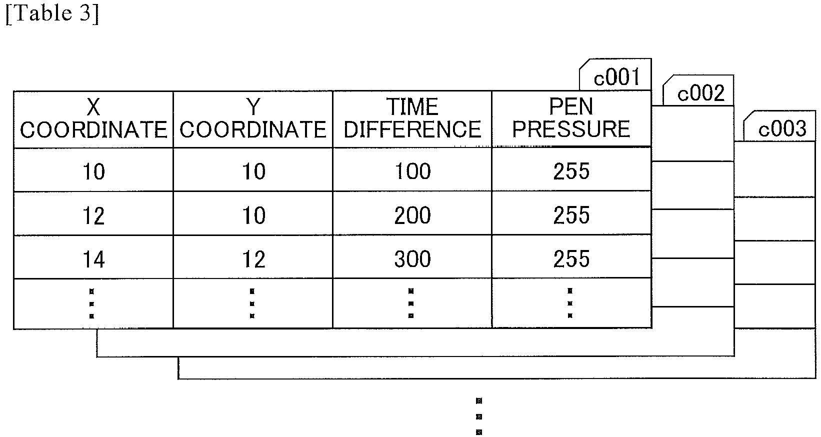

Further, this coordinate array data ID includes detailed information as illustrated in Table 3. Table 3 schematically illustrates the coordinates array data. As illustrated in Table 3, the coordinate array data includes information about, for each point of a stroke, (X coordinate value, Y coordinate value) of the point on the display 3, the time difference (ms) from the start time of the stroke when passing on this point, and the pen pressure of the electronic pen 4 at this point. In other words, a collection of points illustrated in Table 3 is represented by a record of coordinate array data illustrated in Table 2. For example, if the user draws a letter "S" of the alphabet by the electronic pen 4, it is one-stroke drawing that passes through multiple passing points, and the information about these multiple passing points is represented by the coordinate array data.

Also, the media data among the items of the page data illustrated in Table 1 represents detailed information as illustrated in Table 4.

**[Table 4]**

| MEDIA DATA ID | DATA TYPE | RECORD OF TIME | X COORDINATE | Y COORDINATE | WIDTH | HEIGHT | DATA |
|---|---|---|---|---|---|---|---|
| m001 | IMAGE | 20130610103432 | 0 | 0 | 1920 | 1080 | abc.jpg |
| m002 | IMAGE | 20130610105402 | 277 | 156 | 1366 | 768 | bcd.jpg |
| m003 | IMAGE | 20130610105017 | 277 | 156 | 1366 | 768 | cde.jpg |
| ⋮ | ⋮ | ⋮ | ⋮ | ⋮ | ⋮ | ⋮ | ⋮ |

Table 4 schematically illustrates the media data. As illustrated in Table 4, the media data includes the media data ID in the page data illustrated in Table 1; the data type of the media data; the record of time when the page processing unit 37 has recorded the page data in the page data storage unit 300; the position (X coordinate value, Y coordinate value) and the size (width, height) of an image to be displayed on the display 3; and the data representing content of the media data, which are associated with each other. Among these, the position of an image to be displayed on the display 3 by the page data represents the position of the upper left end of the image displayed by the page data, relative to the coordinates of the upper left end of the display 3 represented by (X coordinate value, Y coordinate value)=(0, 0).

Referring back to FIG. 5, the description will continue. The remote license management table 310 manages license data that is required for executing a remote sharing process. In this remote license management table 310, as illustrated in Table 5, the product ID of the electronic whiteboard 2, the license ID used for authentication, and the expiration date of the license are associated with each other to be managed.

**[Table 5]**

| PRODUCT ID | LICENSE ID | EXPIRATION DATE |
|---|---|---|
| 1001 | 12345678abcdefgh | 2012/12/31 |
| 1001 | 4321dcba8765hgfe | - |
| ⋮ | ⋮ | ⋮ |

### (Functional configuration of file processing unit 40)

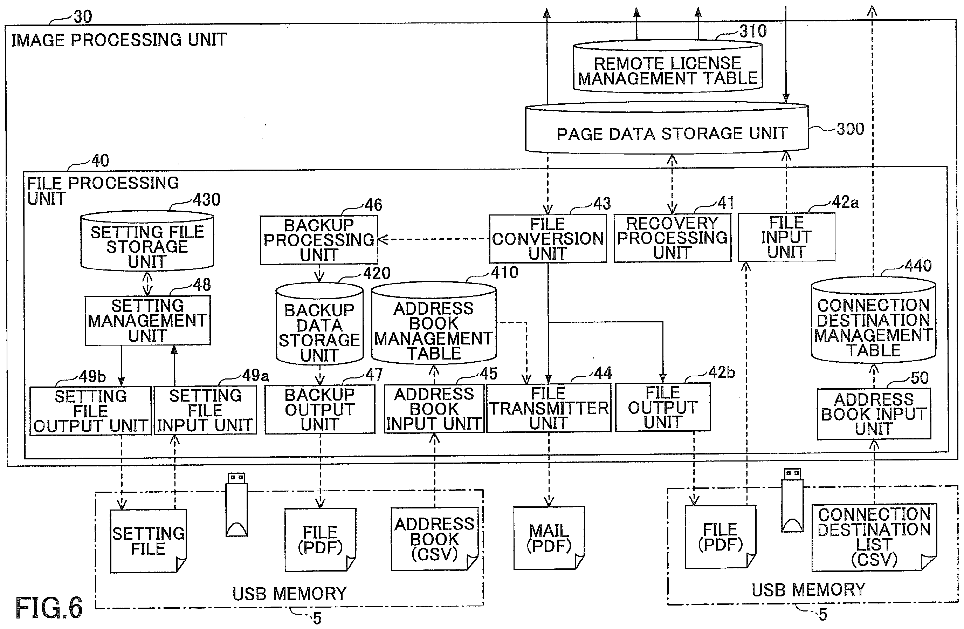

Next, a functional configuration of the file processing unit 40 illustrated as an element in FIG. 5 will be described using FIG. 6. Note that FIG. 6 is an example of a functional block diagram of the file processing unit 40. The file processing unit 40 includes a recovery processing unit 41, a file input unit 42a, a file output unit 42b, a file conversion unit 43, a file transmitter unit 44, an address book input unit 45, a backup processing unit 46, a backup output unit 47, a setting management unit 48, a setting file input unit 49a, a setting file output unit 49b, and an address book input unit 50. The file processing unit 40 further includes an address book management table 410, a backup data storage unit 420, a setting file storage unit 430, and a connection destination management table 440.

Among these, the recovery processing unit 41 detects an abnormal end if the electronic whiteboard 2 has been terminated abnormally, and recovers unsaved page data. For example, in the case of a normal end, the page data is recorded as a PDF file on the USB memory 5 via the file processing unit 40. However, in the case of an abnormal end due to the power down or the like, the page data may remain recorded on the page data storage unit 300. Therefore, when the power is turned on again, the recovery processing unit 41 reads the page data from the page data storage unit 300 to recover the data.

The file input unit 42a reads a PDF file from the USB memory 5, and stores each page as page data in the page data storage unit 300. The file conversion unit 43 converts the page data stored in the page data storage unit 300 into a file in a PDF format.

The file output unit 42b records a PDF file output by the file conversion unit 43 on the USB memory 5.

The file transmitter unit 44 attaches a PDF file generated by the file conversion unit 43 to an e-mail, to transmit the file. The transmission destination of this file is determined by first having the display superimposing unit 36 display contents of the address book management table 410 on the display 3, and then, having the file transmitter unit 44 receive selection of a destination by an operation on an input unit such as a touch panel by the user. In the address book management table 410, as illustrated in Table 6, a name of a destination, and an e-mail address of the destination are associated with each other to be managed.

**[Table 6]**

| NAME | MAIL ADDRESS |
|---|---|
| TARO | taro@alpha.co.jp |
| HANAKO | hanako@beta.co.jp |
| - | jiro@gamma.co.jp |
| ⋮ | ⋮ |

Also, the file transmitter unit 44 may receive input of a mail address as a destination by an operation on an input unit such as a touch panel by the user.

The address book input unit 45 reads a list file of e-mail addresses from the USB memory 5, and manages contents of the file in the address book management table 410.

The backup processing unit 46 stores a file output by the file output unit 42b, and a file transmitted by the file transmitter unit 44 in the backup data storage unit 420 for backup. Note that if the user does not specify a setting for backup, a backup process is not executed. Backup data is stored in a PDF format as illustrated in Table 7.

**[Table 7]**

| |
|---|
| iwb_20130610104423.pdf |
| iwb_20130625152245.pdf |
| iwb_20130628113418.pdf |
| ⋮ |

The backup output unit 47 stores the backup file in the USB memory 5. Upon storing the backup file, the user operates an input unit such as a touch panel to input a passcode for security.

The setting management unit 48 stores and reads various setting information items of the electronic whiteboard 2 on the setting file storage unit 430, to manage the settings. These various setting information items include, for example, settings of the network, settings of the date and time, settings of the region and language, settings of a mail server, settings of address books, settings of a connection destination list, and settings of backup. Note that the settings of the network include, for example, a setting of the IP address of the electronic whiteboard 2, a setting of the netmask, a setting of a default gateway, and a setting of a DNS (Domain Name System).

The setting file output unit 49b records the various setting information items of the electronic whiteboard 2 on the USB memory 5 as a setting file. Note that the user cannot see the content of the setting file for security.

The setting file input unit 49a reads the setting file stored in the USB memory 5, to reflect the various setting information items as various settings on the electronic whiteboard 2.

The address book input unit 50 reads the list file of connection destination IP addresses for a remote sharing process from the USB memory 5, and manages the content of the file in the connection destination management table 440. Table 8 illustrates an example of the connection destination management table 440.

**[Table 8]**

| NAME | IP ADDRESS |
|---|---|
| CONFERENCE ROOM 1 | 192.0.0.1 |
| CONFERENCE ROOM 2 | 192.0.0.2 |
| - | 192.0.0.3 |
| ⋮ | ⋮ |

The connection destination management table 440 is a table for managing IP addresses of electronic whiteboards 2, each of which may serve as the host device. The IP addresses are stored in advance to save time and effort to input the IP address of an electronic whiteboard 2 serving as the host device of a remote sharing process. The electronic whiteboard 2 holding this table is to participate in the remote sharing process as a participating device. In this connection destination management table 440, the name of a site where an electronic whiteboard 2 is installed that accepts a request for participation when serving as the host device, and the IP address of the electronic whiteboard 2 as the host device, are associated with each other to be managed.

Note that the connection destination management table 440 may be omitted. In this case, however, the user of the participating device needs to input the IP address of the host device on an input unit such as a touch panel to start a request for remote processing with the host device. Therefore, the user of the participating device obtains the IP address of the host device from a user of the host device by telephone, e-mail, and the like.

### (Functional configuration of communication control unit 60)

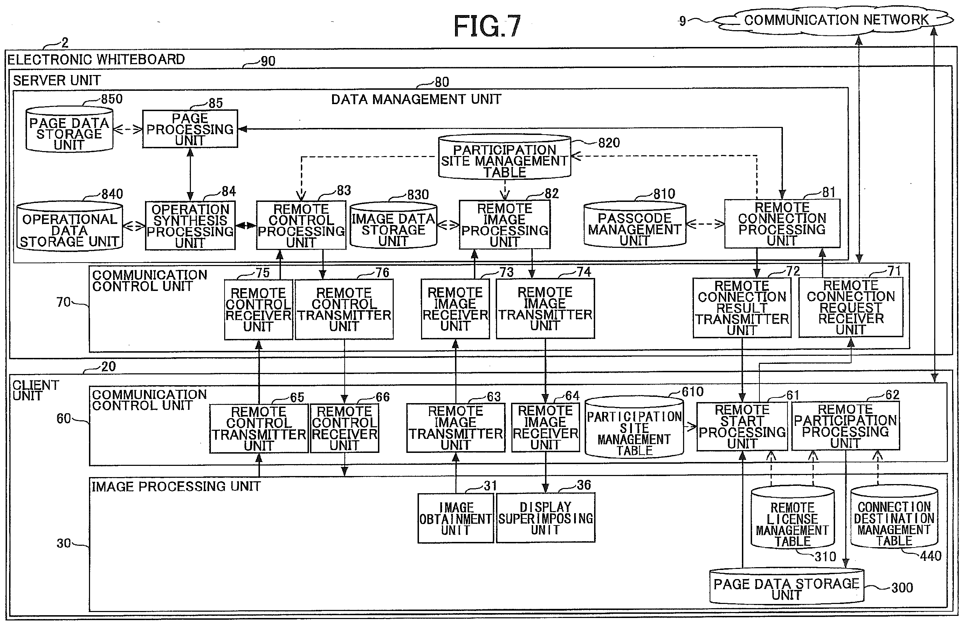

Next, a functional configuration of the communication control unit 60 will be described using FIG. 7. FIG. 7 is an example of the functional block diagram of the server unit 90 and the client unit 20. The communication control unit 60 controls communication with other electronic whiteboards 2 via the communication network 9, and controls communication with a communication control unit 70 in the server unit 90, which will be described later. Therefore, the communication control unit 60 includes a remote start processing unit 61, a remote participation processing unit 62, a remote image transmitter unit 63, a remote image receiver unit 64, a remote control transmitter unit 65, a remote control receiver unit 66, and a participation site management table 610.

Among these, the remote start processing unit 61 makes a request for newly starting a remote sharing process to the server unit 90 of the same electronic whiteboard 2, and receives a result of the request from the server unit 90. In this case, the remote start processing unit 61 refers to the remote license management table 310, and if license information (product identification, license identification, and expiration date) is managed, can make a request for starting the remote sharing process. However, if the license information is not managed, the remote start processing unit 61 cannot make a request for starting a remote sharing process.

The participation site management table 610 is a table in which other electronic whiteboards 2 as participating devices in a remote sharing process are managed when the electronic whiteboard 2 is the host device. An example of the participation site management table 610 is illustrated in Table 9.

**[Table 9]**

| NAME | IP ADDRESS |
|---|---|
| CONFERENCE ROOM 1 | 192.0.0.1 |
| CONFERENCE ROOM 2 | 192.0.0.2 |
| - | 192.0.0.8 |
| ⋮ | ⋮ |

In this participation site management table 610, the name of a site where each participating electronic whiteboard 2 is installed, and the IP address of the electronic whiteboard 2 are associated with each other, to be managed.

The remote participation processing unit 62 makes a request for participating in a remote sharing process to a remote connection request receiver unit 71 in the server unit 90 of the electronic whiteboard 2 as the host device that has already started the remote sharing process, via the communication network 9. Also, in this case, the remote participation processing unit 62 refers to the remote license management table 310. Also, when going to participate in a remote sharing pro cess that has been already started, the remote participation processing unit 62 refers to the connection destination management table 440 to obtain the IP address of the electronic whiteboard 2 being the destination of the participation. Note that instead of the remote participation processing unit 62 referring to the connection destination management table 400, the user may operate an input unit such as a touch panel to input the IP address of the electronic whiteboard 2 being the destination of the participation.

The remote image transmitter unit 63 transmits the output image (C) transmitted from the video obtainment unit 21 via the image obtainment unit 31, to the server unit 90.

From the server unit 90, the remote image receiver unit 64 receives the image data from a video output device connected to another electronic whiteboard 2, and outputs the image data to the display superimposing unit 36, to realize a remote sharing process.

The remote control transmitter unit 65 transmits various operational data items required for a remote sharing process to the server unit 90. These various operational data items include data about, for example, adding a stroke, deleting a stroke, editing (magnifying, reducing, moving, etc.) a stroke, storing page data, generating page data, copying page data, deleting page data, switching the page to be displayed, and the like. Also, from the server unit 90, the remote control receiver unit 66 receives operation data input on another electronic whiteboard 2, and outputs the operation data to the image processing unit 30, to execute a remote sharing process.

[Functional configuration of server unit 90] Next, a functional configuration of the server unit 90 will be described using FIG. 7. The server unit 90 is provided in each electronic whiteboard 2, and any one of the electronic whiteboards 2 can play the role of a server unit. Therefore, the server unit 90 includes the communication control unit 70 and a data management unit 80.

### (Functional configuration of communication control unit 70)

Next, a functional configuration of the communication control unit 70 will be described using FIG. 7.

The communication control unit 70 controls communication with the communication control unit 70 in the client unit 20 in the same electronic whiteboard 2, and communication with the communication control unit 70 in the client unit 20 in another electronic whiteboard 2 via the communication network 9. The data management unit 80 manages operation data, image data, and the like.

Further describing in detail, the communication control unit 70 includes the remote connection request receiver unit 71, a remote connection result transmitter unit 72, a remote image receiver unit 73, a remote image transmitter unit 74, a remote control receiver unit 75, and a remote control transmitter unit 76.

Among these, the remote connection request receiver unit 71 receives a request for starting a remote sharing process from the remote start processing unit 61, and receives a request for participating in a remote sharing process from the remote participation processing unit 62. The remote connection result transmitter unit 72 transmits the result of a request for starting a remote sharing process to the remote start processing unit 61, and transmits the result of a request for participating in a remote sharing process to the remote participation processing unit 62.

The remote image receiver unit 73 receives image data (data of an output image (C)) from the remote image transmitter unit 63, and transmits the data to a remote image processing unit 82, which will be described later. The remote image transmitter unit 74 receives image data from the remote image processing unit 82, and transmits this image data to the remote image receiver unit 64.

The remote control receiver unit 75 receives operation data (data of a stroke image (B) and the like) from the remote control transmitter unit 65, and transmits to a remote control processing unit 83, which will be described later. The remote control transmitter unit 76 receives operation data from the remote control processing unit 83, and transmits this operation data to the remote control receiver unit 66.

### (Functional configuration of data management unit)

Next, a functional configuration of the data management unit 80 will be described using FIG. 7. The data management unit 80 includes a remote connection processing unit 81, the remote image processing unit 82, the remote control processing unit 83, an operation synthesis processing unit 84, and a page processing unit 85. The server unit 90 further includes a passcode management unit 810, a participation site management table 820, an image data storage unit 830, the operational data storage unit 840, and a page data storage unit 850.

Among these, the remote connection processing unit 81 starts a remote sharing process, and ends the remote sharing process. Also, the remote connection processing unit 81 confirms whether a license is available and is within the expiration data, based on license information received by the remote connection request receiver unit 71 from the remote start processing unit 61 along with a request for starting the remote sharing process, or from the remote participation processing unit 62 along with a request for participating in the remote sharing process. The remote connection processing unit 81 further confirms whether the number of requests for participation from other electronic whiteboards 2 as client units does not exceed a predetermined number of possible participants.

Furthermore, the remote connection processing unit 81 determines whether the passcode transmitted along with a request for participating in the remote sharing process from the other electronic whiteboard 2 is the same as the passcode managed by the passcode management unit 810, and if the passcode is the same, permits to participate in the remote sharing process. Note that this passcode is issued by the remote connection processing unit 81 when a new remote sharing process is to be started, and transferred to the user of an electronic whiteboard 2 as a participating device going to participate in the remote sharing process, by telephone or e-mail from the user of the electronic whiteboard 2 as the host device. Then, the user of the participating device going to participate in the remote sharing process inputs the passcode into the participating device via an input unit such as a touch panel, to make a request for participation, and to get permission for the participation. Note that to prioritize user-friendliness over security, only validation of a license state may be executed, and validation of the passcode may be omitted.

Also, if the electronic whiteboard 2 is the host device, the remote connection processing unit 81 stores participating site information included in the request for participation transmitted via the communication network 9 from the remote participation processing unit 62 of the participating device, in the participation site management table 820 of the server unit 90. Then, the remote connection processing unit 81 reads out the remote site information stored in the participation site management table 820, and transmits the information to the remote connection result transmitter unit 72. The remote connection result transmitter unit 72 transmits the remote site information to the remote start processing unit 61 in the client unit 20 of the same host device. The remote start processing unit 61 stores the remote site information in the participation site management table 820. Thus, the remote site information is managed by both the client unit 20 and the server unit 90 in the host device.

The remote image processing unit 82 receives image data (output images (C)) from video output devices (the note PCs 6 and the like) connected to the client units (including the client unit 20 of the electronic whiteboard 2 itself as the host device) of the electronic whiteboards 2 in the remote sharing process, and stores the image data in the image data storage unit 830, and determines the display order of the image data to be processed in the remote sharing process, by time order of the image data items having reached the server unit 90 of the electronic whiteboard 2 itself as the host device. Also, the remote image processing unit 82 refers to the participation site management table 820, and transmits the image data to the client units 20 (including the client unit 20 of the electronic whiteboard 2 itself as the host device) of all the electronic whiteboards 2 participating in the remote sharing process, in the order determined as above, via the communication control unit 70 (the remote image transmitter unit 74).

The remote control processing unit 83 receives various operational data items such as a stroke image (a stroke image (B) and the like) drawn by the client units 20 (including the client unit 20 of the electronic whiteboard 2 itself as the host device) of the electronic whiteboard 2 in a remote sharing process, and determines the display order of the images to be processed in the remote sharing process, by time order of the images having reached the server unit 90 of the electronic whiteboard 2 itself as the host device. Note that the various operational data items are the same as the various operational data items described earlier. Also, the remote control processing unit 83 refers to the participation site management table 820, and transmits the operational data to the client units 20 (including the client unit 20 of the electronic whiteboard 2 itself as the host device) of all the electronic whiteboards 2 participating in the remote sharing process.

The operation synthesis processing unit 84 synthesizes the operation data of the electronic whiteboards 2 output from the remote control processing unit 83, stores the operation data as the result of synthesis in the operational data storage unit 840, and returns the data to the remote control processing unit 83. This operation data is transmitted from the remote control transmitter unit 76 to the client unit of the electronic whiteboard 2 as the host device, and each of the client units of the electronic whiteboards 2 as the participating devices, so as to display the images relating to the same operation data on all the electronic whiteboards 2. An example of operation data is illustrated in Table 10.

**[Table 10]**

| SEQ | OPERATION NAME | SOURCE IP ADDRESS: Port No. | DESTINATION IP ADDRESS: Port No. | OPERATION TYPE | OPERATION OBJECT (PAGE DATA ID/STROKE DATA ID) | DATA |
|---|---|---|---|---|---|---|
| 1 | ADD | 192.0.0.1: 50001 | 192.0.0.1: 50000 | STROKE | p005 | (STROKE DATA) |
| 2 | ADD | 192.0.0.1: 50000 | 192.0.0.2: 50001 | STROKE | p005 | (STROKE DATA) |
| 3 | UPDATE | 192.0.0.2: 50001 | 192.0.0.1: 50000 | STROKE | s006 | (50,40) |
| 4 | UPDATE | 192.0.0.1: 50000 | 192.0.0.1: 50001 | STROKE | s006 | (50,40) |
| 5 | DELETE | 192.0.0.2: 50001 | 192.0.0.1: 50000 | STROKE | s007 | - |
| 6 | DELETE | 192.0.0.1: 50000 | 192.0.0.1: 50001 | STROKE | s007 | - |
| 7 | ADD | 192.0.0.1: 50001 | 192.0.0.1: 50000 | PAGE | - | - |
| 8 | ADD | 192.0.0.1: 50000 | 192.0.0.2: 50001 | PAGE | - | - |
| 9 | ADD | 192.0.0.2: 50001 | 192.0.0.1: 50000 | IMAGE | p006 | aaa.jpg |
| 10 | ADD | 192.0.0.1: 50000 | 192.0.0.1: 50001 | IMAGE | p006 | aaa.jpg |
| ⋮ | ⋮ | ⋮ | ⋮ | ⋮ | ⋮ | ⋮ |

As illustrated in Table 10, a record of operation data includes a SEQ (Sequence), an operation name of the operation data, an IP address and a port No. of the client unit (the server unit) of an electronic whiteboard 2 being the transmission source of the operation data, an IP address and a port No. of the client unit (the server unit) of an electronic whiteboard 2 being the transmission destination of the operation data, an operation type of the operation data, an operation target of the operation data, and data representing content of the operation data, which are associated with each other in the record. For example, a record SEQ 1 represents that a stroke has been drawn by the client unit (port No.: 50001) of an electronic whiteboard 2 (IP address: 192.0.0.1) being the host device, and the operation data has been transmitted to the server unit (port No.: 50000) of the electronic whiteboard 2 (IP address: 192.0.0.1) being the same host device. In this case, the operation type is "STROKE", the operation target is page data having an ID "p005", and the data representing the content of the operation data is data representing a stroke. Also, a record SEQ 2 represents that the operation data has been transmitted from the client unit (port No.: 50000) of the electronic whiteboard 2 (IP address: 192.0.0.1) being the host device, to the client unit (port No.: 50001) of another electronic whiteboard 2 (IP address: 192.0.0.2) being a participating device.

Note that the operation synthesis processing unit 84 synthesizes data in order of operation data items input into this operation synthesis processing unit 84 so that stroke images (B) are displayed on the displays 3 of all the electronic whiteboards 2 in the remote sharing process, in the order of strokes performed by the users of the respective electronic whiteboards 2, if the communication network 9 is not congested.

The page processing unit 85 has the same function as the page processing unit 37 in the image processing unit 30 of the client unit 20, and stores the page data illustrated in Table 1 to Table 3 in the page data storage unit 850 of the server unit 90. Note that the page data storage unit 850 includes the same contents as the page data storage unit 300 in the image processing unit 30, and the description is omitted.

### <Processes or operations in embodiment>

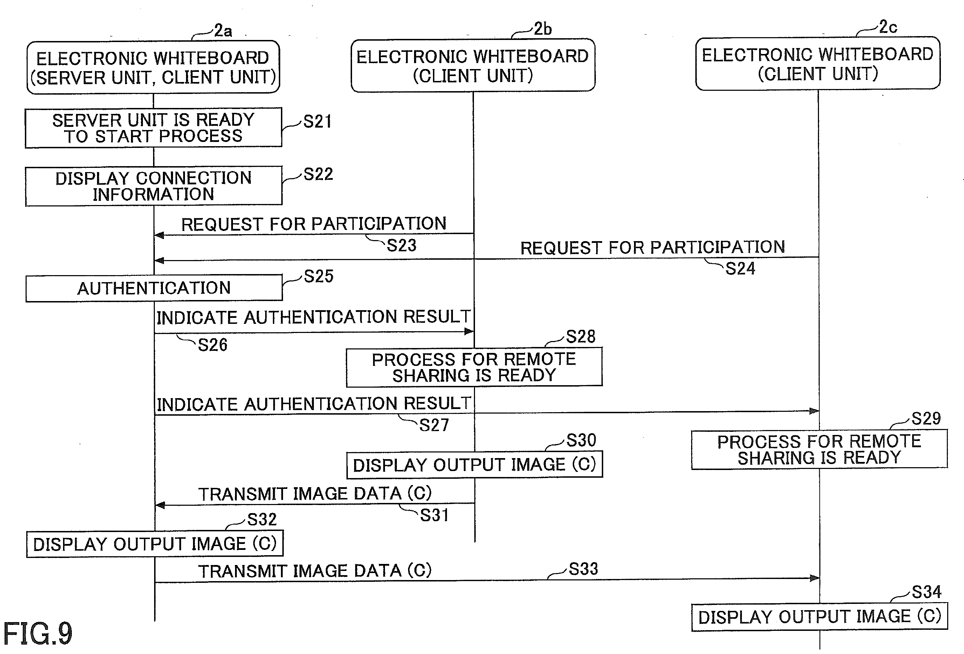

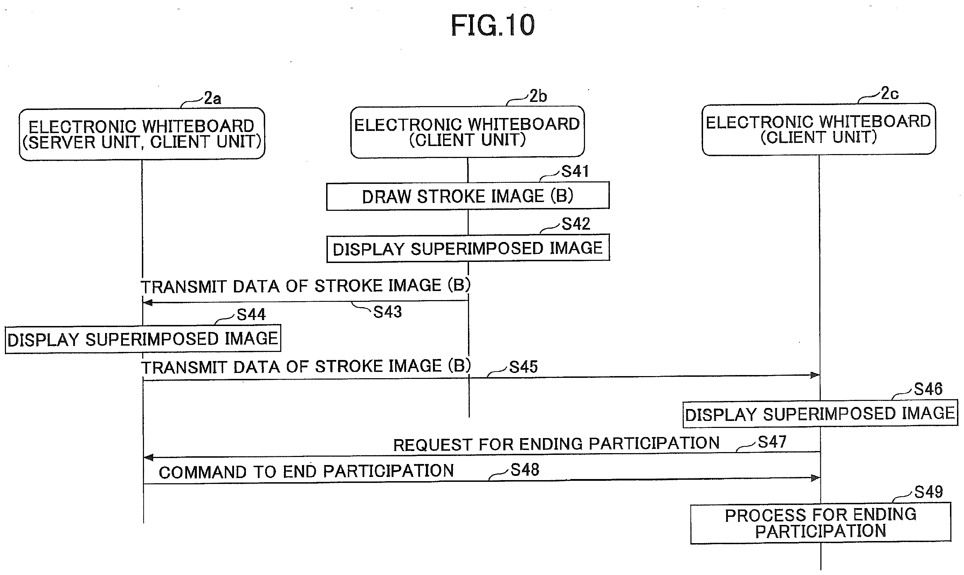

Next, processes or operations in the embodiment will be described using FIG. 9 and FIG. 10. Note that FIG. 9 and FIG. 10 are sequence charts illustrating processes of the electronic whiteboards 2. Using FIG. 9 and FIG. 10, the embodiment will be described for a case where the electronic whiteboard 2a serves as the host device (the server unit and the client unit) holding a remote sharing process, and the electronic whiteboards 2b and 2c serve as participating devices (the client units) that participate in the remote sharing process. Also, here, the electronic whiteboards 2a, 2b, and 2c have the displays 3a, 3b, and 3c connected, respectively, and further, have the note PCs 6a, 6b, and 6c connected, respectively. Also, the electronic pens 4a, 4b, and 4c are used on the electronic whiteboards 2a, 2b, and 2c, respectively.

### (Process for participation)

First, a process will be described for the electronic whiteboards 2b and 2c to participate in a remote sharing process, by using FIG. 9.

Once the power switch of the electronic whiteboard 2a is turned on by the user, the client unit 20 of the electronic whiteboard 2a is activated. Then, when the user performs an operation to activate the server unit 90 on an input unit such as a touch panel, a command to start a process on the server unit 90 is output by the remote start processing unit 61 of the client unit 20, to the remote connection request receiver unit 71 in the server unit 90 of the same electronic whiteboard 2a. Thus, on the electronic whiteboard 2a, not only the client unit 20, but also the server unit 90 become ready to start various processes (Step S21).

Next, the UI image generation unit 33 in the client unit 20 of the electronic whiteboard 2a generates connection information for establishing a connection with the electronic whiteboard 2a, and the video superimposing unit 28 displays the connection information obtained from the UI image generation unit 33 via the display superimposing unit 36, on the display 3a (Step S22).

This connection information includes the IP address of the host device, and a passcode that has been generated for the current remote sharing process. In this case, the passcode stored in the passcode management unit 810 is read by the remote connection processing unit 81, and transmitted to the remote connection result transmitter unit 72 and the remote start processing unit 61, in this order. The passcode is further transmitted from the communication control unit 60 including the remote start processing unit 61 to the image processing unit 30 illustrated in FIG. 5, and eventually, input into the UI image generation unit 33. Thus, the connection information includes the passcode. Then, the user of the electronic whiteboard 2a transfers the connection information to users of the electronic whiteboards 2b and 2c by telephone or e-mail. Note that if the connection destination management table 440 is provided, a participating device can make a request for participation even if the IP address of the host device is not included the connection information.

Next, on the electronic whiteboards 2b and 2c, in response to receiving input of the connection information by an operation by the user on an input unit such as a touch panel, the remote participation processing unit 62 in the client unit 20 of each of the electronic whiteboards 2a and 2b transmits the passcode to the communication control unit 70 in the server unit 90 of the electronic whiteboard 2a via the communication network 9, based on the IP address in the connection information, to make a request for participation (Steps S23 and S24). Thus, the remote connection request receiver unit 71 of the communication control unit 70 receives the requests for participation (including the passcode) from the electronic whiteboards 2b and 2c, respectively, and outputs this passcode to the remote connection processing unit 81.

Next, the remote connection processing unit 81 executes authentication with the passcode received from the electronic whiteboards 2b and 2c by using the passcode managed in the passcode management unit 810 (Step S25).

Then, the remote connection result transmitter unit 72 indicates the authentication results to the client units 20 of the electronic whiteboards 2b and 2c, respectively (Steps S26 and S27).

If the electronic whiteboards 2b and 2c have been determined to be valid electronic whiteboards by the authentication at Step S25, communication is established for the remote sharing process between the electronic whiteboard 2a being the host device and the electronic whiteboards 2b and 2c and being the participating devices, and the remote participation processing unit 62 in the client unit 20 of each of the electronic whiteboards 2b and 2c becomes ready to start the remote sharing process with the other electronic whiteboards 2 (Steps S28 and S29).

### (Displaying output image)

Next, a process for displaying an output image (C) in a remote sharing process will be described using FIG. 9.

First, the electronic whiteboard 2b displays an output image (C) on the display 3b (Step S30). Specifically, the image obtainment unit 31 of the electronic whiteboard 2b receives data of an output image (C) displayed on the note PC 6b from the note PC 6b via the video obtainment unit 21, and transmits the data to the display 3b via the display superimposing unit 36 and the video superimposing unit 28, to display the output image (C) on the display 3b.

Next, the image processing unit 30 including the image obtainment unit 31 of the electronic whiteboard 2b transmits the data of the output image (C) to the remote image transmitter unit 63, and the communication control unit 60 including the remote image transmitter unit 63 transmits the data of the output image (C) to the communication control unit 70 of the electronic whiteboard 2a being the host device via the communication network 9 (Step S31). Thus, the remote image receiver unit 73 of the electronic whiteboard 2a receives the data of the output image (C), and outputs the data to the remote image processing unit 82 so that the remote image processing unit 82 stores the data of the output image (C) in the image data storage unit 830.

Next, the electronic whiteboard 2a being the host device displays the output image (C) on the display 3a (Step S32). Specifically, the remote image processing unit 82 of the electronic whiteboard 2a outputs the data of the output image (C) received from the remote image receiver unit 73 to the remote image transmitter unit 74. The remote image transmitter unit 74 outputs the data of the output image (C) to the remote image receiver unit 64 in the client unit 20 of the electronic whiteboard 2a being the same host device. The remote image receiver unit 64 outputs the data of the output image (C) to the display superimposing unit 36. The display superimposing unit 36 outputs the data of the output image (C) to the video superimposing unit 28. The video superimposing unit 28 outputs the data of the output image (C) to the display 3a. Thus, the display 3a displays the output image (C).

Next, the communication control unit 70 including the remote image transmitter unit 74 in the server unit 90 of the electronic whiteboard 2a as the host device transmits the data of the output image (C) to the communication control unit 60 of the electronic whiteboard 2c, which is not the electronic whiteboard 2b being the transmission source of the data of the output image (C), via the communication network 9 (Step S33). Thus, the remote image receiver unit 64 of the electronic whiteboard 2c being the participating device receives the data of the output image (C).

Next, the electronic whiteboard 2c displays the output image (C) on the display 3c (Step S34). Specifically, the remote image receiver unit 64 of the electronic whiteboard 2c outputs the data of the output image (C) received at Step S33 as described above, to the display superimposing unit 36 of the electronic whiteboard 2c. The display superimposing unit 36 outputs the data of the output image (C) to the video superimposing unit 28. The video superimposing unit 28 outputs the data of the output image (C) to the display 3c. Thus, the display 3c displays the output image (C).

Note that if respective data items of the UI image (A) and the stroke image (B) in addition to the data of the output image (C) are input into the video superimposing unit 28, the display superimposing unit 36 generates a superimposed image (A, B, C), and the video superimposing unit 28 outputs the data of the superimposed image (A, B, C) on the display 3c. Also, if data of a video (E) for a video conference has been transmitted from the video conference terminal 7 to the video superimposing unit 28, the video superimposing unit 28 superimposes the data of the video (E) for the video conference with the superimposed image (A, B, C) by picture-in-picture, and outputs the superimposed data on the display 3c.

### (Displaying superimposed image)

Next, a process for displaying a superimposed image in a remote sharing process will be described using FIG. 10.

First, the user of the electronic whiteboard 2b draws a stroke image (B) on the electronic whiteboard 2b by using the electronic pen 4b (Step S41).

Next, as illustrated in FIG. 8, the display superimposing unit 36 of the electronic whiteboard 2b superimposes the stroke image (B) with a UI image (A) and an output image (C), and the video superimposing unit 28 displays the superimposed image (A, B, C) on the display 3b of the electronic whiteboard 2b (Step S42). Specifically, the stroke processing unit 32 of the electronic whiteboard 2b receives the data of the stroke image (B) as operation data from the coordinate detection unit 22 and the touch detection unit 24 via the event classification unit 25, and transmits the data to the display superimposing unit 36. Thus, the display superimposing unit 36 can superimpose the stroke image (B) with the UI image (A) and the output image (C), and the video superimposing unit 28 can display the superimposed image (A, B, C) on the display 3b of the electronic whiteboard 2b.

Next, the image processing unit 30 including the stroke processing unit 32 of the electronic whiteboard 2b transmits the data of the stroke image (B) to the remote control transmitter unit 65 so that the remote control transmitter unit 65 of the electronic whiteboard 2b transmits the data of the stroke image (B) to the communication control unit 70 of the electronic whiteboard 2a being the host device via the communication network 9 (Step S43).

Thus, the remote control receiver unit 75 of the electronic whiteboard 2a receives the data of the stroke image (B), and outputs the data to the remote control processing unit 83 so that the remote control processing unit 83 outputs the data of the stroke image (B) to the operation synthesis processing unit 84. In this way, upon each drawing, the data of the stroke image (B) drawn on the electronic whiteboard 2b is sequentially transmitted to the remote control processing unit 83 of the electronic whiteboard 2a being the host device. This data of the stroke image (B) is data represented by each stroke data ID illustrated in Table 2 and the like. Therefore, for example, as described above, if the user draws a letter "T" of the alphabet by the electronic pen 4, it is a two-stroke drawing, and hence, the data of the stroke image (B) is transmitted for the two stroke data IDs sequentially.

Next, the electronic whiteboard 2a being the host device displays the superimposed image (A, B, C) including the data of the stroke image (B) transmitted from the electronic whiteboard 2b, on the display 3a (Step S44). Specifically, the operation synthesis processing unit 84 of the electronic whiteboard 2a synthesizes multiple data items of the stroke images (B) having been sequentially transmitted via the remote control processing unit 83, stores the synthesized data in the operational data storage unit 840, and returns the synthesized data to the remote control processing unit 83. Thus, the remote control processing unit 83 outputs the synthesized data of the stroke image (B) received from the operation synthesis processing unit 84, to the remote control transmitter unit 76. The remote control transmitter unit 76 outputs the synthesized data of the stroke image (B), to the remote control receiver unit 66 in the client unit 20 of the electronic whiteboard 2a being the same host device. The remote control receiver unit 66 outputs the synthesized data of the stroke image (B) to the display superimposing unit 36 in the image processing unit 30. Thus, the display superimposing unit 36 superimposes the stroke image (B) having been synthesized with the UI image (A) and the output image (C). Finally, the video superimposing unit 28 displays the superimposed image (A, B, C) superimposed by the display superimposing unit 36 on the display 3a.

Next, the communication control unit 70 including the remote control transmitter unit 76 in the server unit 90 of the electronic whiteboard 2a as the host device transmits the synthesized data of the stroke image (B) to the communication control unit 60 of the electronic whiteboard 2c, which is not the electronic whiteboard 2b being the transmission source of the data of the stroke image (B), via the communication network 9 (Step S45). Thus, the remote control receiver unit 66 of the electronic whiteboard 2c being the participating device receives the synthesized data of the stroke image (B).

Next, the electronic whiteboard 2c displays the superimposed image (A, B, C) on the display 3c (Step S46). Specifically, the remote control receiver unit 66 of the electronic whiteboard 2c outputs the data of the stroke image (B) having been synthesized, received at Step S45 described above, to the image processing unit 30 of the electronic whiteboard 2c. The display superimposing unit 36 of the image processing unit 30 superimposes the data of the UI image (A) and the output image (C) with the data of the stroke image (B) having been synthesized, and outputs the data of the superimposed image (A, B, C) to the video superimposing unit 28. The video superimposing unit 28 outputs the data of the superimposed image (A, B, C) to the display 3c. Thus, the display 3c displays the superimposed image (A, B, C).

Note that although the output image (C) is displayed on the display 3 in the process described above, the background image (D) may be displayed instead of this output image (C). Alternatively, the output image (C) and the background image (D) do no need to be in an exclusive relationship; both the output image (C) and the background image (D) may be displayed on the display 3 at the same time.

### (Ending participation)

Next, a process for ending participation in a remote sharing process by a participating device will be described using FIG. 10. In the embodiment illustrated in FIG. 10, a process is illustrated for the electronic whiteboard 2c to end the participation.

First, in response to receiving a request for ending the participation by an operation on an input unit such as a touch panel by the user, the remote participation processing unit 62 in the electronic whiteboard 2c makes a request for ending the participation to the communication control unit 70 in the server unit 90 of the electronic whiteboard 2a as the host device (Step S47). Thus, the remote connection request receiver unit 71 of the communication control unit 70 receives the request for ending the participation from the electronic whiteboard 2c, and outputs the request for ending the participation to the remote connection processing unit 81 along with the IP address of the electronic whiteboard 2c. Then, based on the IP address transmitted from the remote connection request receiver unit 71, the remote connection processing unit 81 of the electronic whiteboard 2a deletes the IP address of the electronic whiteboard 2c having made the request for ending the participation, and the name of a site where the electronic whiteboard 2c is installed, in the participation site management table 820, and outputs an indication that includes the IP address of the electronic whiteboard 2c and a message that the IP address has been deleted, to the remote connection result transmitter unit 72.

Next, the communication control unit 70 including the remote connection result transmitter unit 72 issues a command to end the participation to the communication control unit 60 in the client unit 20 of the electronic whiteboard 2c via the communication network 9 (Step S48). Then, to complete ending the participation, the remote participation processing unit 62 of the communication control unit 60 in the electronic whiteboard 2c disconnects the communication for the remote sharing process, and the participation ends (Step S49).

### <Installation of program using installer>

As described with reference to FIG. 2, an electronic whiteboard 2 immediately below in the network structure of a tree structure determines whether the version of a program on the device itself is the same as the version of the program in the electronic whiteboard 2 immediately above, and if not the same, obtains a program file to execute a process for upgrading the version of the program. The installer is actually another program, and may be referred to as an "introduction program" to introduce the program to be upgraded into the electronic whiteboard 2.

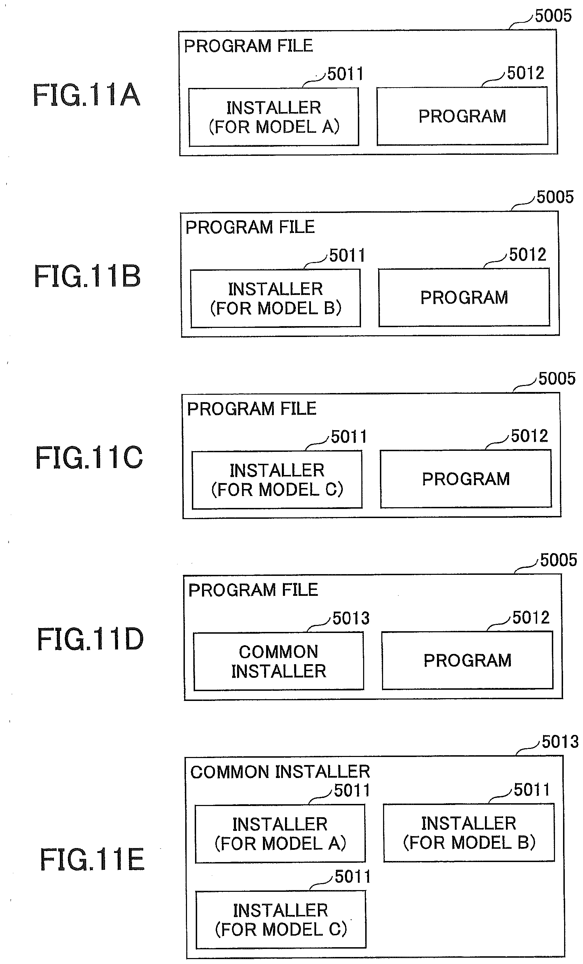

First, the installer will be described using FIGs. 11A-11E. FIGs. 11A-11C schematically illustrates configurations of program files. A program file 5005 is a file having an installer 5011 and a program 5012. A reference symbol 5005 of the program file may be replaced by a reference symbol 2005 if an electronic whiteboard 2 immediately below has the program file, but for the sake of description, the reference symbol 5005 is used here. The program file 5005 is, for example, a compressed file, and separated into the installer 5011 and the program 5012 when decompressed by the electronic whiteboard 2. Note that this program 5012 may be actually constituted with multiple parts (may be called "modules" or the like).

The installer 5011 deletes an old version of the program in a predetermined folder (may be called a "directory") in the electronic whiteboard 2, and copies the program 5012 of the program file 5005 into this folder. Also, the installer 5011 deletes information about the old version of the program in the registry, and sets information about the new program 5012. The registry includes information about files of programs, folders storing the files, and information associated with the files.

The installer 5011 may be different depending on models. In FIGs. 11A-11C, the installers 5011 for model A, for model B, and for model C are illustrated, respectively. In the embodiment, the model of an electronic whiteboard 2 is determined by whether a specific installer 5011 is operational on the electronic whiteboard 2. If an installer 5011 operational on an electronic whiteboard 2 does not operate normally on another electronic whiteboard 2, the model of the electronic whiteboard 2 is different from the model of the other electronic whiteboard 2. Also, factors to make an installer 5011 not operate normally include different types of OSes, and different versions of an OS. Different types of OSes (for example, Windows (registered trademark) and Linux (registered trademark)) require different installers 5011. Also, if versions of an OS differs, for example, settings of the registry may be different, which may require different installers 5011.

Therefore, developers in manufacturers may determine that models are different considering types and versions of OSes of an electronic whiteboard 2, and develop installers 5011 for respective models.

Note that types and versions of OSes being different may imply that different model numbers, appearances (for example, display sizes), or development generations of an electronic whiteboard 2, and in such a case, the model may be defined in terms of the model number, appearance (for example, display size), or development generation.

Next, based on FIGs. 11D-11E, a common installer 5013 will be described. The common installer 5013 is also yet another program, and may be referred to as an "introduction program", but more specifically, is referred to as a "common introduction program" as it is common among models.

If different models of the electronic whiteboards 2 coexist in the network structure of the electronic whiteboards 2 in FIG. 1A, it may not be possible for a relatively lower electronic whiteboard 2 to upgrade the version of a program. On the other hand, it may not be feasible for the administrator or the like to select a model so that the electronic whiteboards 2 in the network structure are of the same model.

Thereupon, the common installer 5013 is used in the embodiment. FIG. 11D illustrates the program file 5005 having the common installer 5013, and FIG. 11E schematically illustrates a structure of the common installer 5013. As illustrated in the figure, the common installer 5013 includes the installers (for model A, for model B, and for model C) 5011 for the respective models. In other words, the common installer 5013 includes installers 5011 corresponding to all or at least multiple models of the electronic whiteboards 2 in the network structure. Note that the number of models being three is just an example, and the number may be two, or four or more.

An electronic whiteboard 2 immediately below determines the model of the electronic whiteboard 2 on which the common installer 5013 is to be executed, and executes one of the installers 5011 compatible with the determined model. For example, the electronic whiteboard 2 executes the installer (for model A) 5011 in the case of the model A, executes the installer (for model B) 5011 in the case of model B, and executes an installer (for model C) 5011 in the case of model C. Note that the installer 5011 may not be executed as such if the parent unit 2p does not have the common installer 5013.

If the common installer 5013 corresponds to all the models of the electronic whiteboards 2 in the network structure, it is possible to upgrade the program for all the electronic whiteboards 2 in the network structure by the common installer 5013 once installed in the parent unit 2p. This makes the version of the program of an electronic whiteboard 2 immediately above equivalent to the version of the program of an electronic whiteboard 2 immediately below, and hence, the electronic whiteboard 2 immediately below can obtain the setting information from the electronic whiteboard 2 immediately above. Therefore, all the electronic whiteboards 2 in the network structure can have the setting information synchronized.

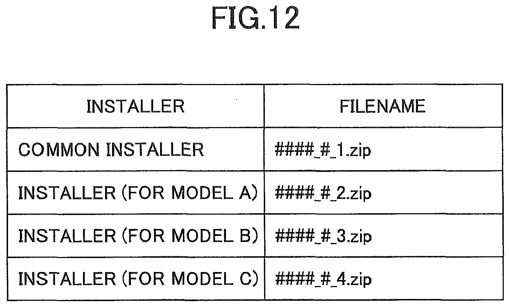

FIG. 12 is an example of a diagram illustrating a relationship between a filename of the program file 5005 and the installer 5011 included in the program file 5005. The installer 5011 is associated with a filename in FIG. 12. For example, the filename of the program file 5005 including the common installer 5013 is ####_#_1.zip; the filename of the program file 5005 including the installer 5011 for model A is ####_#_2.zip; the filename of the program file 5005 including the installer 5011 for model B is ####_#_3.zip; and the filename of the program file 5005 including the installer 5011 for model C is ####_#_4.zip. Thus, the installer 5011 included in the program file 5005 can be determined by referring to the filename. Note that the part of the filename where the type of the installer 5011 is reflected is just an example, and may be reflected in another part, such as in an extension. Also, the information about the model to which the installer 5011 or the common installer 5013 corresponds may be included in a file attached to or included in the program file 5005 such as meta-data.

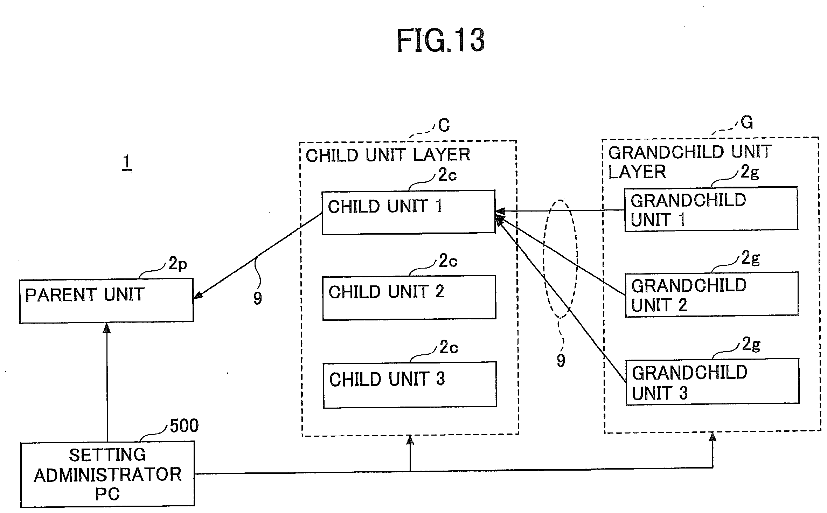

FIG. 13 is an example of a diagram illustrating a network structure of the image processing system 1. The electronic whiteboards 2 are connected via the communication network 9. The network structure in FIG. 13 is a diagram for describing a multi-layer hierarchical structure for a process for upgrading the version of a program, and a process for having setting information synchronized; in this structure, one electronic whiteboard 2 can communicate image data and the like with another electronic whiteboards 2, which may not be the electronic whiteboard 2 immediately above. However, the process for upgrading the version of a program in the embodiment and the process for having setting information synchronized are executed in the network structure of the tree structure as illustrated in FIG. 13.

Note that electronic whiteboards 2 immediately above and immediately below may be connected by a USB cable or the like instead of the communication network 9. Also, the electronic whiteboards 2 may be connected wired or wirelessly.

A setting administrator PC 500 illustrated in FIG. 13 is a PC operated by the setting administrator who sets and manages the setting information on the electronic whiteboards 2. The setting administrator may be a person in charge in a company where the electronic whiteboards 2 are installed, or may be a service engineer of the electronic whiteboards 2.

The setting administrator operates the setting administrator PC 500 to set a program file including a new version of a program and setting information, which will be described later, on the parent unit 2p. This program file preferably includes a common installer 5013, or at least includes an installer compatible with the model of the parent unit 2p. Once the new version of the program and the setting information have been set only on the parent unit 2p, the parent unit 2p and all the electronic whiteboards 2 in the child unit layer C and the grandchild unit layer C synchronize to have the same version of the program, and to have the same setting information set on all the electronic whiteboards 2 of the child unit layer C and the grandchild unit layer C. Note that instead of upgrading the version, the version of the program may be downgraded, but upgrading to a newer version is assumed in the following description.

Browser software runs on the setting administrator PC 500, and communicates with the parent unit 2p to obtain screen information described in HTML or JavaScript (registered trademark). The setting administrator PC 500 displays a setting information setting screen, which will be described later, on a display. This makes it possible for the setting administrator to set or input the setting information.

Also, the electronic whiteboard 2 of the parent unit 2p may access a server that distributes the program, to obtain a new version of the program. Similarly, the electronic whiteboard 2 of the parent unit 2p may access the server on which the setting administrator has set the setting information, to obtain the setting information from the server.

Also, the setting administrator operates the setting administrator PC 500 to set communication information, which will be described later, on the electronic whiteboards 2 in the child unit layer C and the grandchild unit layer C. The communication information is information for an electronic whiteboard 2 immediately below to communicate with the electronic whiteboard 2 immediately above. Therefore, the setting administrator PC 500 displays a communication information setting screen, which will be described later, on a display. This makes it possible for the setting administrator to set or input the communication information for an electronic whiteboard 2 immediately below to communicate with the electronic whiteboard 2 immediately above.

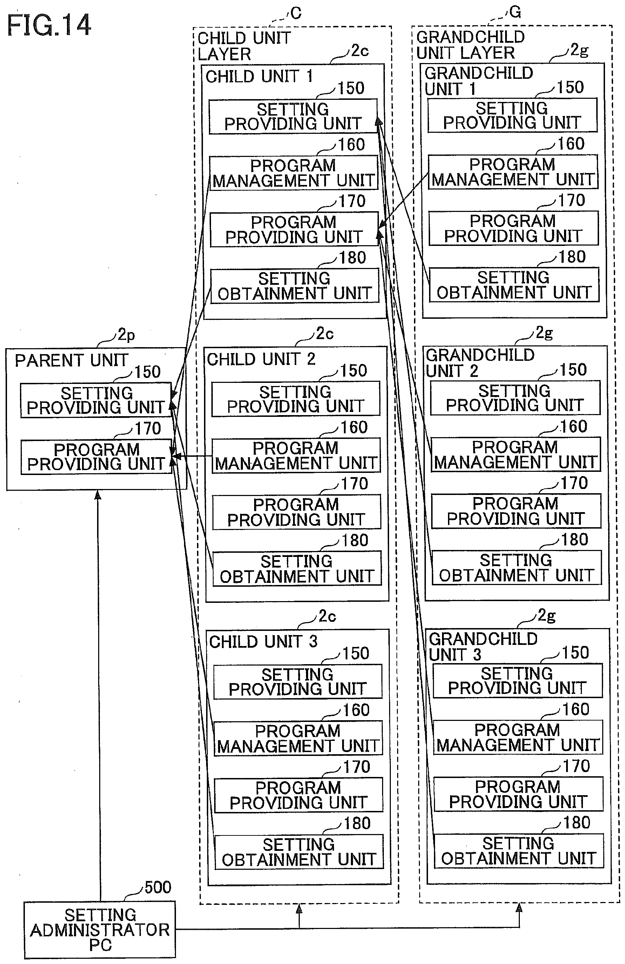

FIG. 14 is an example of a diagram illustrating an overview of functions operating on the parent unit 2p, child units 2c, and grandchild units 2g. A program providing unit 170 runs on the parent unit 2p, and a program management unit 160 and the program providing unit 170 run on the child unit 1. When an electronic whiteboard 2 in the child unit layer C is to obtain a new version of the program from the parent unit 2p, the program management unit 160 runs on the electronic whiteboard 2 in the child unit layer C. When the new version of the program is requested by an electronic whiteboard 2 in the grandchild unit layer C, the program providing unit 170 runs on the electronic whiteboard 2 in the child unit layer C. This is the same for a relationship between the grandchild unit layer C and the great-grandchild unit layer although not illustrated in the figure.

The program providing unit 170 provides an electronic whiteboard 2 immediately below with the program file including a new version of the program, in response to a request from the electronic whiteboard 2 immediately below. The program management unit 160 determines whether the version of the program on the electronic whiteboard 2 is the same as that on the electronic whiteboard 2 immediately above, and if different, determines whether the installer 5011 included in the program is the common installer 5013 or the installer 5011 for the model of the device itself. If the installer 5011 included in the program is the common installer 5013 or the installer 5011 for the model of the device itself, the program management unit 160 executes the common installer 5013 or the installer 5011 to upgrade the program.

Also, a setting providing unit 150 runs on the parent unit 2p, and the setting providing unit 150 and a setting obtainment unit 180 run on the child unit 1. When the electronic whiteboard 2 in the child unit layer C is to obtain the setting information from the parent unit 2p, the setting obtainment unit 180 runs on the electronic whiteboard 2 in the child unit layer C. When the setting information is requested by an electronic whiteboard 2 in the grandchild unit layer C, the setting providing unit 150 runs on the electronic whiteboard 2 in the child unit layer C. This is the same for a relationship between the grandchild unit layer C and a great-grandchild unit layer although not illustrated in the figure.

### <Hardware configuration of setting administrator PC>

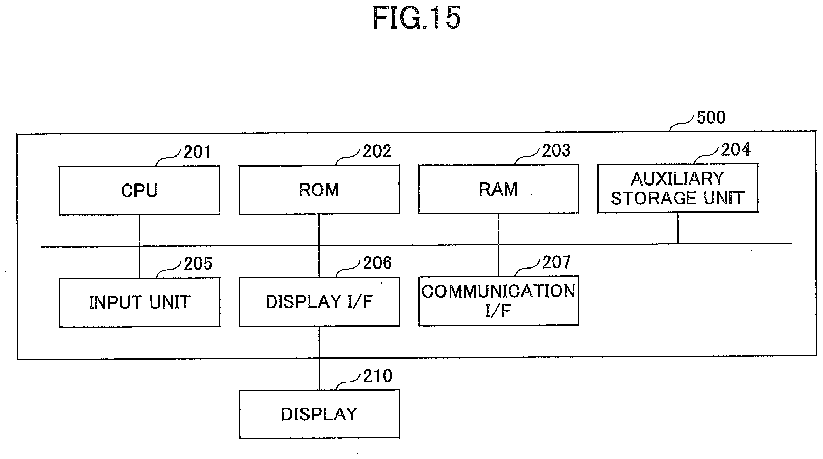

FIG. 15 is an example of a hardware configuration diagram of the setting administrator PC 500. The setting administrator PC 500 includes a CPU (Central Processing Unit) 201, a ROM (Read-Only Memory) 202, a RAM (Random Access Memory) 203, and an auxiliary storage unit 204. The setting administrator PC 500 further includes an input unit 205, a display I/F 206, and a communication I/F 207. Note that the units of the setting administrator PC 500 are mutually connected via a bus 208. As such, the setting administrator PC 500 includes functions of an information processing apparatus.

The CPU 201 executes various programs and an OS (Operating System) stored in the auxiliary storage unit 204. The ROM 202 is a non-volatile memory. The ROM 202 stores programs, data, and the like that are required for the CPU 201 to execute the various programs stored in the auxiliary storage unit 204.

The RAM 203 is a main memory unit such as a DRAM (Dynamic Random Access Memory), an SRAM (Static Random Access Memory), or the like. The various programs stored in the auxiliary storage unit 204 are loaded into the RAM 203 when to be executed by the CPU 201, and the RAM 203 serves as a work area for the CPU 201.

The auxiliary storage unit 204 stores the various programs executed by the CPU 201, and various databases that are used when the various programs are executed by the CPU 201. The auxiliary storage unit 204 is a non-volatile memory, for example, an HDD (Hard Disk Drive), an SSD (Solid State Drive), or the like. Note that the various databases will be described later.

The input unit 205 is an interface for an operator to input various commands into the setting administrator PC 500. The input unit 205 includes, for example, a keyboard, a mouse, a touch panel, and a sound input unit. Further, an attachment unit for a recording medium or the like such as a USB I/F may be included.

The display I/F 206 displays various information items held in the setting administrator PC 500 in response to a request from the CPU 201, in forms of cursors, menus, windows, characters, and images on a display 210. The display I/F 206 is, for example, a graphic chip or a display I/F.

The communication I/F 207 is a network I/F to communicate with the electronic whiteboards 2 via the communication network 9.

### <About function of program management unit>

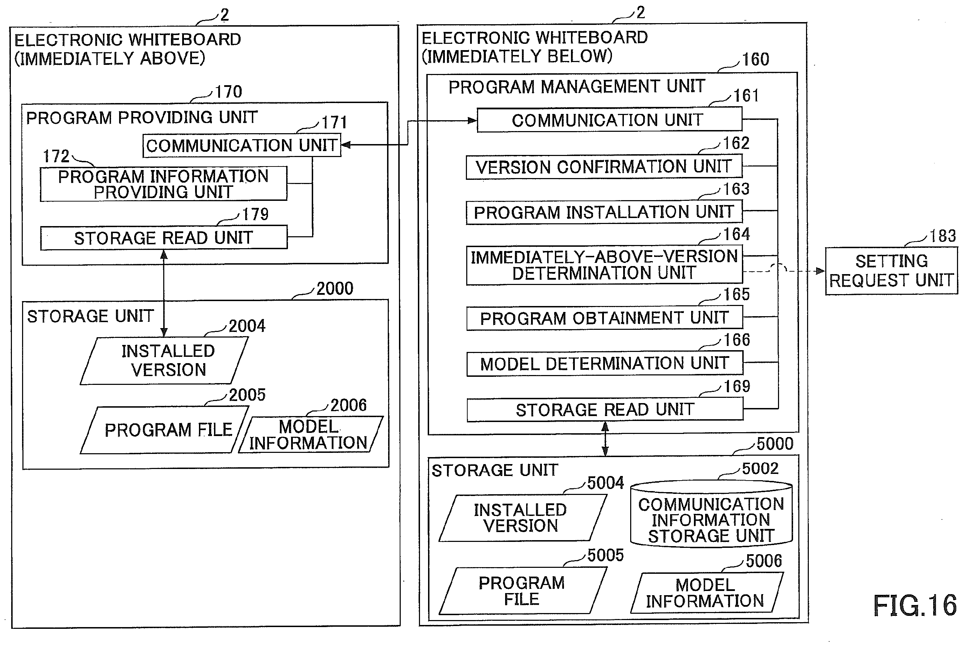

FIG. 16 is an example of a detailed functional block diagram of the program providing unit 170 and the program management unit 160. Note that the program management unit 160 of the electronic whiteboard 2 immediately above and the program providing unit 170 of the electronic whiteboard 2 immediately below are omitted for the sake of description.

### «Program providing unit 170»

The program providing unit 170 includes a communication unit 171, a program information providing unit 172, and a storage read unit 179. These functional units are functions or measures implemented by one or more elements illustrated in FIG. 4 controlled by the CPU 101 executing a program (namely, an already installed program) stored in the SSD 104 illustrated in FIG. 4.

Also, the program providing unit 170 can access a storage unit 2000 constituted with one or more of the SSD 104, the ROM 102, and the RAM 103 illustrated in FIG. 4. The storage unit 2000 stores an installed version 2004, a program file 2005, and model information 2006. The installed version 2004 is a version of the program that is currently installed in the electronic whiteboard 2. The model information 2006 is information about the model of the electronic whiteboard 2 immediately above. The model information 2006 just needs to be information with which the model can be determined. The model information 2006 may be the type of the OS if the model depends on the type of the OS, the version of the OS if the model depends on the version of the OS, information about the appearance if the model depends on the appearance, the model number if the model depends on the model number, or the development generation if the model depends on the development generation. The program file 2005 is a file storing the program and the installer 5011 or the common installer 5013 as described above. Generally, multiple parts (for example, may be called modules) are stored in a folder or hierarchically. The program file 2005 may be compressed or may be in an executable format. One of the multiple parts of the program file 2005 has the version described by text data or the like, and the electronic whiteboard 2 can read the version included in the program file 2005.

The program file 2005 in the storage unit 2000 may have been stored by the setting administrator, may have been downloaded from a server distributing the program, or may have been transmitted from the electronic whiteboard 2 further immediately above the electronic whiteboard 2 immediately above.

The version of the program included in the program file 2005 may be different from or may be the same as the installed version 2004. If the program has been installed in the electronic whiteboard 2 by using the program file 2005, the version of the program included in the program file 2005 is the same as the installed version 2004. During a period immediately after the setting administrator or the server distributing the program has stored the program file 2005 in the storage unit 2000, and before the electronic whiteboard 2 completes installation of the program by using this program file 2005, the version of the program included in the program file 2005 is different from the installed version 2004.

### (About function of program providing unit 170)

The communication unit 171 is implemented by the CPU 101, the network controller 105, and the like illustrated in FIG. 4, to transmit and receive various information items with an electronic whiteboard 2 immediately below. Note that in the following description, even when the program information providing unit 172 communicates with an electronic whiteboard 2 immediately below via the communication unit 171, description of "via the communication unit 171" may be omitted.

In response to receiving a query about the installed version of the program from the electronic whiteboard 2 immediately below, the program information providing unit 172 reads out an installed version 2004 from the storage unit 2000 via the storage read unit 179, and transmits the version to an electronic whiteboard 2 immediately below. In response to receiving a request for the program file 2005 from an electronic whiteboard 2 immediately below, the program information providing unit 172 reads out the program file 2005 from the storage unit 2000 via the storage read unit 179, and transmits the program file 2005 to the electronic whiteboard 2 immediately below.

The storage read unit 179 reads and stores various information items in the storage unit 2000. Note that in the following description, when the storage read unit 179 reads or stores various information items in the storage unit 2000, description of "via the storage read unit 179" may be omitted for the sake of description.

### <<Program management unit 160>>

The program management unit 160 includes a communication unit 161, a version confirmation unit 162, a program installation unit 163, an immediately-above-version determination unit 164, a program obtainment unit 165, a model determination unit 166, and a storage read unit 169. These functional units are functions or measures implemented by one or more elements illustrated in FIG. 4 controlled by the CPU 101 executing a program stored in the SSD 104 illustrated in FIG. 4.

Also, the program management unit 160 can access a storage unit 5000 constituted with one or more of the SSD 104, the ROM 102, and the RAM 103 illustrated in FIG. 4. The storage unit 5000 stores an installed version 5004, the program file 5005, and model information 5006, and further has a communication information storage unit 5002 installed. The installed version 5004, the program file 5005, and the model information 5006 are the same as those in the electronic whiteboard 2 immediately above. The program file 5005 in the storage unit 5000 has been transmitted from the electronic whiteboard 2 immediately above. Information stored in the communication information storage unit 5002 will be described later.

### (About function of program management unit 160)

The communication unit 161 is implemented by the CPU 101, the network controller 105, and the like illustrated in FIG. 4, to transmit and receive various information items with the electronic whiteboard 2 immediately above. Note that in the following description, even when an electronic whiteboard 2 immediately below communicates with the electronic whiteboard 2 immediately above via the communication unit 161, description of "via the communication unit 161" may be omitted.

The immediately-above-version determination unit 164 obtains the version of the program installed in the electronic whiteboard 2 immediately above (the installed version 2004) from the electronic whiteboard 2 immediately above, to determine whether the obtained version is the same as the version of the program installed in the electronic whiteboard 2 immediately below (the installed version 5004) being the device itself. By this determination, it is possible to determine whether the setting information can be synchronized with the electronic whiteboard 2 immediately above. If having determined that the versions are the same, the immediately-above-version determination unit 164 permits a setting request unit 183, which will be described later, to make the setting information synchronized.

If the version is determined to be different from the version in the electronic whiteboard 2 immediately above, the program obtainment unit 165 obtains the program file 2005 from the electronic whiteboard 2 immediately above, and stores the obtained file in the storage unit 5000 as the program file 5005. If the program file 5005 has been already stored in the storage unit 5000, the program file 5005 is overwritten.

The version confirmation unit 162 compares the installed version 5004 with the version of the program included in the program file 5005 stored in the storage unit 5000, and if the versions are different, determines that installation is required. The version confirmation unit 162 may determine that installation is required only if the version of the program included in the program file 5005 is newer than the installed version 5004.

The model determination unit 166 reads out the model information 5006 in the storage unit 5000, to determine whether the installer 5011 of the program file can be executed. Since a program file includes the information with which the installer 5011 or the common installer 5013 included in the program file can be identified, comparing a program file with the model information 5006 makes it possible to determine whether the installer 5011 or the common installer 5013 can be executed.

If having determined that the model determination unit 166 can execute the installer 5011, the program installation unit 163 runs the installer 5011 or the common installer 5013 in the program file 5005 on the electronic whiteboard 2 being the device itself.

The storage read unit 169 reads and stores various information items in the storage unit 5000. Note that in the following description, when the storage read unit 169 reads or stores various information items in the storage unit 5000, description of "via the storage read unit 169" may be omitted for the sake of description.

### <<About function of setting providing unit>>

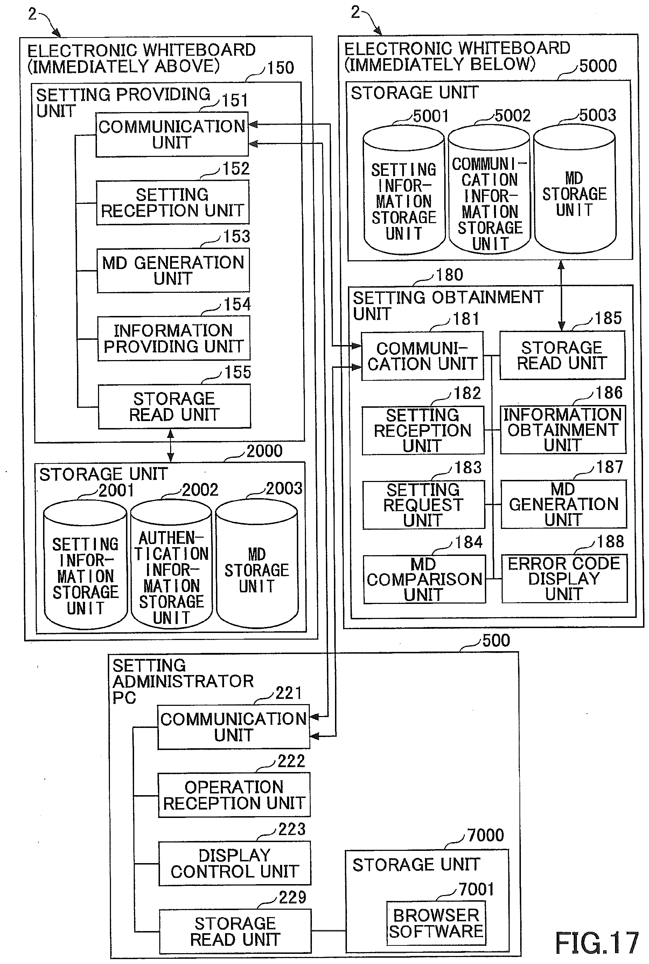

FIG. 17 is an example of a detailed functional block diagram of the setting obtainment unit 180 and the setting providing unit 150. Although the electronic whiteboard 2 immediately below also has the setting providing unit 150, it is omitted for the sake of description, and although the electronic whiteboard 2 immediately above also has the setting obtainment unit 180, it is omitted for the sake of description.

The setting providing unit 150 includes a communication unit 151, a setting reception unit 152, an MD generation unit 153, an information providing unit 154, and a storage read unit 155. These functional units are functions or measures implemented by one or more elements illustrated in FIG. 4 controlled by the CPU 101 executing a program stored in the SSD 104 illustrated in FIG. 4.

Also, the setting providing unit 150 can access the storage unit 2000 constituted with one or more of the SSD 104, the ROM 102, and the RAM 103 illustrated in FIG. 4. The storage unit 2000 stores a setting information storage unit 2001, an authentication information storage unit 2002, and an MD storage unit 2003. First, information stored in the storage unit 2000 will be described. Note that although the storage unit 2000 in FIG. 17 is the same as the storage unit 2000 in FIG. 16, they may be different.

**[Table 11]**

| | |
|---|---|
| PASSCODE | * * * * * * * |

Table 11 illustrates an example of authentication information stored in the authentication information storage unit 2002. In Table 11, a passcode is registered as authentication information. The electronic whiteboard 2 immediately above authenticates the electronic whiteboard 2 immediately below depending on whether the passcode transmitted by the electronic whiteboard 2 immediately below is equivalent to the passcode stored in the authentication information storage unit 2002. Note that as a method for authentication, an electronic certificate may be used instead of using the passcode.

**[Table 12]**

| SETTING INFORMATION TYPE | SETTING INFORMATION DATE AND TIME | FILENAME |
|---|---|---|
| FOR OPERATING MAIN UNIT | 2015/03/01 14:15:32 | set-valid |

Table 12 illustrates an example of the setting information stored in the setting information storage unit 2001. In Table 12, a setting information type, setting information date and time, and a filename are registered. The setting information for operating the main unit represents setting information currently effective. The setting information date and time represent the date and time when the setting information was set on the electronic whiteboard 2. The filename is a filename of a file storing the setting information.

**[Table 13]**

| | |
|---|---|
| SETTING INFORMATION TYPE | HASH VALUE |
| FOR OPERATING MAIN UNIT | ··· |

Table 13 illustrates an example of a hash value (a message digest) stored in the MD storage unit 2003. The MD storage unit 2003 stores the message digest of the setting information for operating the main unit. Although a hash value is generally used as the message digest, the message digest may be information having a property of changing its value if the setting information changes even slightly. Once the setting information has been set, the electronic whiteboard 2 generates a hash value from the setting information, and stores the value in the MD storage unit 2003. The hash value is used by the electronic whiteboard 2 immediately below to determine whether the setting information needs to be synchronized.

### (About function of setting providing unit 150)

The communication unit 151 is implemented by the CPU 101, the network controller 105, and the like illustrated in FIG. 4, to transmit and receive various information items with an electronic whiteboard 2 immediately below and the setting administrator PC 500. For example, the communication unit 151 transmits screen information of a setting information setting screen to the setting administrator PC 500, and transmits the setting information to an electronic whiteboard 2 immediately below. Note that the communication protocol to be used may be HTTP (Hypertext Transfer Protocol), HTTP/2, SPDY, or any other available communication protocol. Also, in the following description, even when the setting providing unit 150 communicates with the setting obtainment unit 180 via the communication unit 151, description of "via the communication unit 151" may be omitted.

The setting reception unit 152 is implemented by the CPU 101 and the like illustrated in FIG. 4, to function as a Web server and a Web application that generate screen information of a setting information setting screen to be transmitted to the setting administrator PC 500, written in HTML, JavaScript (registered trademark), or the like.

The MD generation unit 153 is implemented by the CPU 101 and the like illustrated in FIG. 4, to generate a message digest from the setting information, and to store the setting information in the MD storage unit 2003 via the storage read unit 155.

The information providing unit 154 is implemented by the CPU 101 and the like illustrated in FIG. 4, to provide the setting information for an electronic whiteboard 2 immediately below in response to a request from the electronic whiteboard 2 immediately below.

The storage read unit 155 is implemented by the CPU 101, the SSD 104, the RAM 103, and the like illustrated in FIG. 4, to store various information items in the storage unit 2000, and to read various information items from the storage unit 2000. Note that in the following description, even when the setting providing unit 150 reads and writes the information stored in the storage unit 2000, description of "via the storage read unit 155" may be omitted.

### <<About function of setting obtainment unit 180>>

The setting obtainment unit 180 includes a communication unit 181, a setting reception unit 182, the setting request unit 183, an MD comparison unit 184, a storage read unit 185, an information obtainment unit 186, an MD generation unit 187, and an error code display unit 188. These functional units are functions or measures implemented by one or more elements illustrated in FIG. 4 controlled by the CPU 101 executing a program stored in the SSD 104 illustrated in FIG. 4.

Also, the setting obtainment unit 180 can access the storage unit 5000 constituted with one or more of the SSD 104, the ROM 102, and the RAM 103 illustrated in FIG. 4. The storage unit 5000 stores a setting information storage unit 5001, the communication information storage unit 5002, and an MD storage unit 5003. The setting information stored in the setting information storage unit 5001 and the message digest (hash value) stored in the MD storage unit 5003 are the same as those stored in the electronic whiteboard 2 immediately above. Note that although the storage unit 5000 in FIG. 17 is the same as the storage unit 5000 in FIG. 16, they may be different.

**[Table 14]**

| | |
|---|---|
| IP ADDRESS (ELECTRONIC WHITEBOARD IN UPPER LAYER) | 192.168.1.1 |
| PASSCODE (ELECTRONIC WHITEBOARD IN UPPER LAYER) | * * * * * * * |

Table 14 is a diagram illustrating an example of the communication information stored in the communication information storage unit 5002. The communication information is information for an electronic whiteboard 2 immediately below to communicate with the electronic whiteboard 2 immediately above. In the embodiment, the IP address and the passcode are stored as the communication information. The setting administrator operates the setting administrator PC 500 to set these on each electronic whiteboard 2 (except for the electronic whiteboard 2 being a parent unit), as will be described later. Assuming the network structure of the tree structure having multi-levels (three or more levels) as illustrated in FIG. 13, the setting administrator sets the IP address and the passcode of the electronic whiteboard 2 immediately above, viewed from each electronic whiteboard 2. Note that the communication information illustrated in the figure is just an example; a port number and the like may be included.

### (About function of setting obtainment unit 180)

The communication unit 181 is implemented by the CPU 101, the network controller 105, and the like illustrated in FIG. 4, to transmit and receive various information items with the electronic whiteboard 2 immediately above and the setting administrator PC 500. For example, the communication unit 181 transmits screen information of a communication information setting screen to the setting administrator PC 500, and receives the setting information from the electronic whiteboard 2 immediately above. Note that the communication protocol to be used may be HTTP, HTTP/2, SPDY, or any other available communication protocol. Also, in the following description, even when the setting obtainment unit 180 communicates with the setting providing unit 150 via the communication unit 181, description of "via the communication unit 181" may be omitted.

The setting reception unit 182 is implemented by the CPU 101 and the like illustrated in FIG. 4, to function as a Web server and a Web application, and to generate screen information of a communication information setting screen to be transmitted to the setting administrator PC 500, written in HTML, JavaScript (registered trademark), or the like.

The setting request unit 183 is implemented by the CPU 101 and the like illustrated in FIG. 4, to start a process for having the setting information synchronized with the electronic whiteboard 2 immediately above if the immediately-above-version determination unit 164 has determined that the installed version of the program is the same as in the electronic whiteboard 2 immediately above. The timing to start the synchronization is set in synchronization information in Table 15. Also, once having started the communication, the setting request unit 183 obtains a hash value from the electronic whiteboard 2 immediately above.

The MD comparison unit 184 is implemented by the CPU 101 and the like illustrated in FIG. 4, to compare a hash value stored in the MD storage unit 5003 of the storage unit 5000 with the hash value obtained from the electronic whiteboard 2 immediately above.

The information obtainment unit 186 is implemented by the CPU 101 and the like illustrated in FIG. 4, to obtain the setting information from the electronic whiteboard 2 immediately above if the hash values have turned out to be different as a result of the comparison by the MD comparison unit 184. The information obtainment unit 186 stores the setting information obtained via the storage read unit 185, in the setting information storage unit 5001 of the storage unit 5000.

The MD generation unit 187 is implemented by the CPU 101 and the like illustrated in FIG. 4, to generate a message digest from the setting information once the setting information for operating the main unit has been stored in the setting information storage unit 5001 of the storage unit 5000, and to store the message digest in the MD storage unit 5003 via the storage read unit 185.

The error code display unit 188 is implemented by the CPU 101 and the like illustrated in FIG. 4, to display an error code and the like about the process for having the setting information synchronized on the display 3 or on the setting administrator PC 500.

The storage read unit 185 is implemented by the CPU 101, the SSD 104, and the RAM 103 and the like illustrated in FIG. 4, to store various information items in the storage unit 5000, and to read out various information items from the storage unit 5000. Note that in the following description, even when the setting obtainment unit 180 reads and writes the information stored in the storage unit 5000, description of "via the storage read unit 185" may be omitted.

### <<About functions of setting administrator PC>>

The setting administrator PC 500 includes a communication unit 221, an operation reception unit 222, a display control unit 223, and a storage read unit 229. These functional units are implemented by the CPU 201 executing browser software 7001 stored in the auxiliary storage unit 204, to control one or more of the elements illustrated in FIG. 15.

Also, the setting administrator PC 500 can access a storage unit 7000 constituted with at least one of the auxiliary storage unit 204, the ROM 202, and the RAM 203 illustrated in FIG. 15. The storage unit 7000 stores the browser software 7001, or may store an application having the same communication functions as the browser software 7001.

### (About functions of setting administrator PC 500)

The communication unit 221 is implemented by the CPU 201, the communication I/F 207, and the like illustrated in FIG. 15, to transmit and receive various information items with the electronic whiteboards 2. For example, the communication unit 221 transmits the setting information and the communication information input by the setting administrator, to an electronic whiteboard 2.

The operation reception unit 222 is implemented by the CPU 201, the input unit 205, and the like illustrated in FIG. 15 to receive various types of operations by the setting administrator. Specifically, the operation reception unit 222 receives, as input, the setting information, the communication information, and the like.

The display control unit 223 is implemented by the CPU 201, the display I/F 206, and the like illustrated in FIG. 15, to display a setting information setting screen and a communication information setting screen on the display 210. Specifically, the display control unit 223 interprets screen information transmitted from an electronic whiteboard 2 written in HTML, JavaScript (registered trademark), or the like, and displays the screens.

The storage read unit 229 is implemented by the CPU 201, the ROM 202, the RAM 203, and the like illustrated in FIG. 15, to store various information items in the storage unit 7000, and to read out various information items from the storage unit 7000.

### <Setting information setting screen>

FIG. 18A is a diagram illustrating an example of a setting information setting screen 501 displayed on the display 210 of the setting administrator PC 500. A system setting button 502, a security setting button 503, a network setting button 504, and a date and time setting button 505 are displayed on the setting information setting screen 501. Digits "1-4" represent item numbers. The setting administrator presses each button to specify detailed settings. In the following, the setting information set with each button will be described.
* System settings -- information is set for the site name, automatic shutout time, automatic reactivation time, automatic standby time, synchronization, and the like.
* Security settings -- domains at which inputting a mail address by the user is permitted or restricted (if specified as both permitted and restricted, it may be effective as an input permitted domain), restriction about direct input of a mail address, the minimum number of digits of a passcode, generation timing of a passcode, restriction about displaying a passcode, and the like. More specifically, "generation timing of a passcode" means timing (such as when activated) to generate a passcode or a specific time if an electronic whiteboard 2 generates the passcode automatically. Therefore, the electronic whiteboard 2 can generate a passcode automatically; alternatively, the setting administrator may set the passcode at his/her discretion.
* Network settings -- IP address, subnet mask, default gateway, and DNS (Domain Name System), and the like are set.
* Date and time settings -- time zone, whether to synchronize with a time server and the like are set.

If the timing for synchronization is set at reactivation of the electronic whiteboard 2, the setting administrator can set the timing for synchronization by setting the automatic reactivation time in the system settings. In addition, anytime may be set as the timing for synchronization discretionarily. Since the timing for synchronization is included in the setting information and shared among the electronic whiteboards 2, the electronic whiteboards 2 immediately below can obtain the setting information from the electronic whiteboard 2 immediately above at common timing.

Note that FIG. 18A just illustrates an example of the setting information, and the setting administrator can set a lot of other items. In principle, an information item that can be set on the setting information setting screen 501 is included in the setting information, but an information item not desirable to be synchronized is exceptionally excluded from the synchronization. For example, although the network settings include the IP address and the subnet mask, the IP address is excluded from the synchronization because if the IP address is synchronized, all the electronic whiteboards 2 have the same IP address assigned. The subnet mask is also excluded from the synchronization because subnet masks may not be the same for all the electronic whiteboards 2.

The setting administrator PC 500 receives the setting contents, and transmits the setting contents to the electronic whiteboard 2 on which the setting information setting screen 501 is displayed. Thus, the setting providing unit 150 registers the setting information in the setting information storage unit 2001.

Note that it is possible to have the setting reception unit 152 of the electronic whiteboard 2 immediately above display the setting information setting screen 501 as illustrated in FIG. 18A on the display 3 of the electronic whiteboard 2, to receive the settings from the setting administrator.

### <<System setting screen>>

FIG. 18B is a diagram illustrating an example of a system setting screen 601 displayed on the display of the setting administrator PC 500. The system setting screen 601 is displayed if the system setting button 502 is pressed. A message of "Synchronize device setting" is displayed along with a checkbox 602 on the system setting screen 601. The setting administrator turns on the checkbox 602 when going to have the setting information synchronized between the electronic whiteboard 2 immediately above and the electronic whiteboard 2 immediately below.

Note that the checkbox 602 of the parent unit 2p (the electronic whiteboard 2 immediately above) is also set on. This is to allow the parent unit 2p not to provide the setting information.

If the checkbox 602 is set on, the setting administrator can set synchronization items 6021 and a synchronization timing 6022. The item numbers in FIG. 18A are displayed as the synchronization items 6021 to be selected individually. As the synchronization timing 6022, reactivation time, power-off time, and regular hours are displayed so that one of them can be selected.

The setting of the checkbox 602 is reflected in "synchronization" in Table 15, which will be described later. Similarly, the settings of the synchronization items 6021 are reflected in "synchronization items". Similarly, the setting of the synchronization timing 6022 is reflected in "synchronization timing".

Also, a message of "Upgrade version automatically" is displayed along with a checkbox 607 on the system setting screen 601. The setting administrator sets the checkbox 607 on when going to have an electronic whiteboard 2 obtain a program file from the electronic whiteboard 2 immediately above, to upgrade the version of a program. Although upgrading the version of a program may be needed to have the setting information synchronized as described above, the user may not want to upgrade the version of the program. In such a case, the setting administrator can set the checkbox 607 off.

Once the checkbox 607 has been set on, the setting administrator can set a checkbox 608 of display confirmation for version upgrade. . Even if the setting administrator has set the checkbox 607 on, the checkbox 608 being set on makes the electronic whiteboard 2 display a dialogue, which will be described later, on the display 3 before upgrading the version of the program. This makes it possible to confirm with the user whether to upgrade the version before actually upgrading the version.

Note that the checkbox 608 of the parent unit 2p (the electronic whiteboard 2 immediately above) is also set on. This is to allow the parent unit 2p not to provide the program file 2005.

If going to set the system settings on the electronic whiteboard 2, the setting administrator presses an OK button 620; or if not going to set the system settings on the electronic whiteboard 2, the setting administrator presses a cancel button 621. The setting administrator PC 500 receives the setting contents, and transmits the setting contents to the electronic whiteboard 2 on which the system setting screen 601 is displayed. Thus, the setting reception unit 182 registers the setting information in the setting information storage unit 5001.

Note that it is possible to have the setting reception unit 182 of the electronic whiteboard 2 display the system setting screen 601 as illustrated in FIG. 18B on the display 3 of the electronic whiteboard 2, to receive the settings from the setting administrator.

**[Table 15]**

| ITEM NUMBER | ITEM | CONTENT |
|---|---|---|
| 1 | SYSTEM SETTING | SITE NAME: OO OFFICE |
| | | AUTOMATIC SHUTOUT TIME: ONE HOUR |
| | | AUTOMATIC REACTIVATION TIME: 4AM |
| | | AUTOMATIC STANDBY TIME: 20 MIN |
| | | SYNCHRONIZATION: ON |
| | | SYNCHRONIZATION TIMING: UPON REACTIVATION |
| | | SYNCHRONIZATION ITEMS: ITEM NUMBERS 1, 2, 4 |
| | | AUTOMATIC UPGRADE: ON |
| | | DISPLAY CONFIRMATION FOR VERSION UPGRADE: ON |
| 2 | SECURITY SETTING | INPUT-PERMITTED DOMAIN: aaa.co.jp |
| | | INPUT-RESTRICTED DOMAIN: bbb.co.jp |
| | | INHIBITION OF MAIL ADDRESS INPUT: ON |
| | | MINIMUM CHARACTERS OF PASSCODE: 4 |
| | | TIMING TO GENERATE PASSCODE: 1ST DAY, EVERY MONTH |
| | | DISPLAY RESTRICTION OF PASSCODE: OFF |
| 3 | NETWORK SETTING | IP ADDRESS: 192.168.2.1 |
| | | SUBNET MASK: 255.255.255.0 |
| | | DEFAULT GATEWAY: 192.168.2.0 |
| | | DNS: 192.168.2.0 |
| 4 | DATE AND TIME SETTING | TIME ZONE: UTC + 9 |
| | | SYNCHRONIZATION WITH TIME SERVER: ON |

Table 15 schematically illustrates an example of contents of the setting information set by the setting administrator (a specific example of the setting information in Table 12). In Table 15, items and contents are registered for each item number.

Among these, "synchronization", "synchronization timing", and "synchronization item" are registered in the system settings as settings about synchronization of the setting information. The "synchronization" is set on when executing a synchronization process, or set off when not executing a synchronization process. The "synchronization timing" is set to timing to have the electronic whiteboard 2 synchronized. The "synchronization item" is set to a number representing an item to be synchronized among numbers included in the setting information. The "synchronization timing" may be set to reactivation time, power-off time, regular hours (for example, 4 o'clock every day) set in advance, or the like.

Also, as settings about the version upgrade of a program, "automatic version upgrade" and "version upgrade permission display" are registered. The "automatic version upgrade" is set on if executing a version upgrade automatically; or off if not executing a version upgrade. The "version upgrade permission display" is set on if a dialogue, which will be described later, is to be displayed; or off if the dialogue is not to be displayed.

### <<Communication information setting screen>>

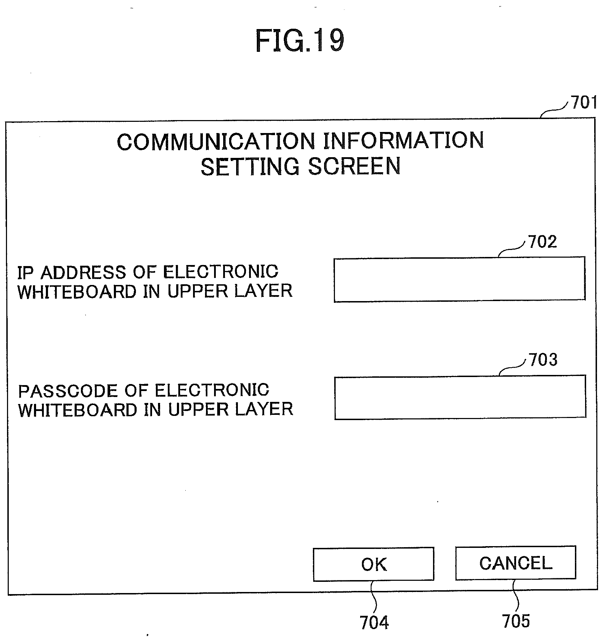

FIG. 19 is a diagram illustrating an example of a communication information setting screen 701 displayed on the display of the setting administrator PC 500. An IP address input field 702 and a passcode input field 703 are displayed on the communication information setting screen 701. The setting administrator inputs the IP address of the electronic whiteboard 2 immediately above viewed from the electronic whiteboard 2 on which the communication information setting screen 701 is displayed, into the IP address input field 702. The setting administrator also inputs a passcode input into the passcode input field 703.

If going to set the communication information on the electronic whiteboard 2, the setting administrator presses an OK button 704; or if not going to set the communication information on the electronic whiteboard 2, the setting administrator presses a cancel button 705. The setting administrator PC 500 receives the setting contents, and transmits the setting contents to the electronic whiteboard 2 on which the system setting screen 601 is displayed. Thus, the setting reception unit 182 registers the setting information in the communication information storage unit 5002.

Note that it is possible to have the setting reception unit 182 of the electronic whiteboard 2 display the communication information setting screen 701 as illustrated in FIG. 19 on the display 3 of an electronic whiteboard 2, to receive the settings from the setting administrator.

### <Installation steps>

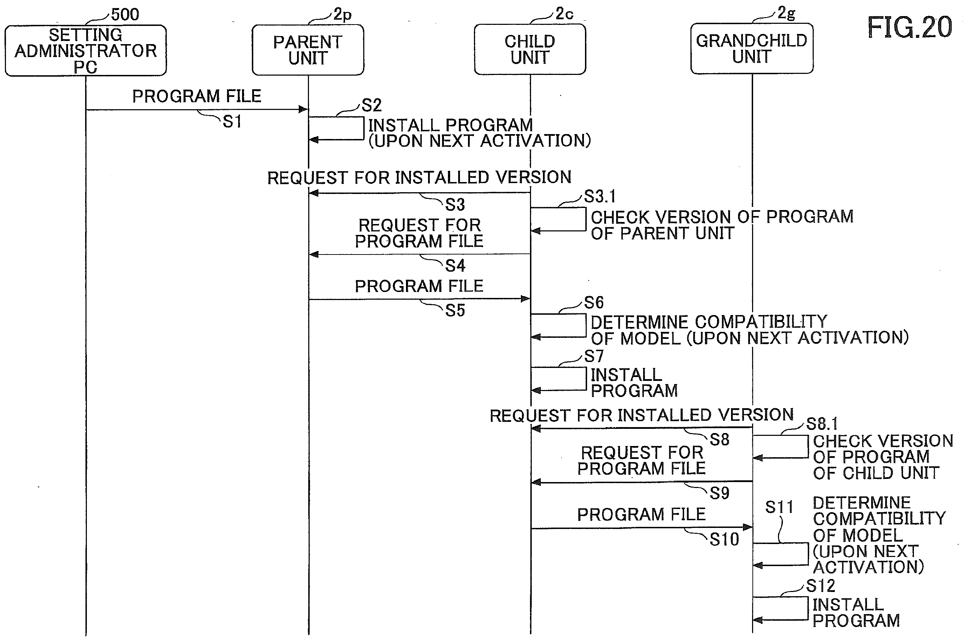

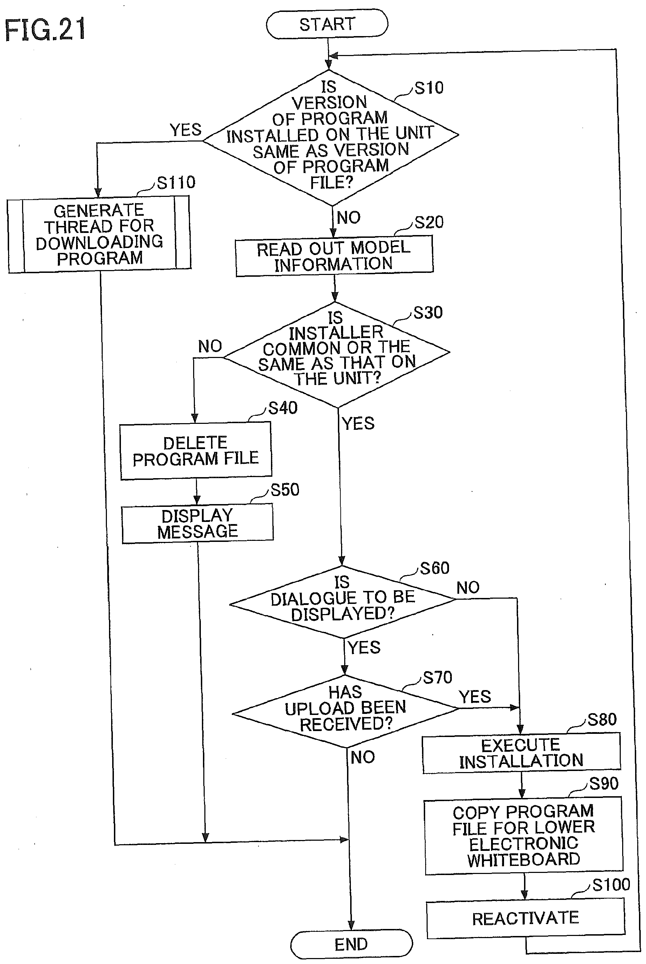

FIG. 20 is an example of a sequence chart illustrating steps for synchronizing a new version of a program in the image processing system 1. Note that FIG. 20 illustrates a process for any one of child units 2c in the child unit layer C, and any one of grandchild units 2g in the grandchild unit layer G.
S1: the setting administrator operates the setting administrator PC 500, and sets the new version of the program file 2005 on the parent unit 2p. The setting administrator may attach a USB memory storing the program file 2005 to the parent unit 2p, to copy the file into the storage unit 2000. The parent unit 2p may download the program file 2005 from a server distributing the program.
S2: the parent unit 2p stores the program file 2005 in the storage unit 2000, to install the program of the program file 2005 in the device itself when activated for the next time. The installation causes a state where versions of the program are different on the parent unit 2p and on the child unit 2c. It is possible for the setting administrator to install the program file 2005 forcibly.
S3: the immediately-above-version determination unit 164 of the child unit 2c checks the version of the program of the parent unit 2p when the child unit 2c is activated. First, the immediately-above-version determination unit 164 makes a request for the version installed in the parent unit 2p (the installed version 2004).
S3.1: Next, the immediately-above-version determination unit 164 of the child unit 2c determines whether the version of the program installed in the parent unit 2p obtained at Step S3 (the installed version 2004) is the same as the version of the program installed in the child unit 2c (the installed version 5004). It is assumed in FIG. 20 that the versions are different; if the versions are the same, the rest of the steps will not be executed.
S4: the program obtainment unit 165 of the child unit 2c makes a request for the program file 2005 of the parent unit 2p. Note that the program obtainment unit 165 transmits the passcode stored in the communication information storage unit 5002 to the parent unit 2p, to log in.
S5: the program information providing unit 172 of the parent unit 2p transmits the program file 2005 stored in the storage unit 2000 to the child unit 2c.
S6: the program obtainment unit 165 of the child unit 2c stores the obtained program file 2005 in the storage unit 5000 as the program file 5005 so that the model determination unit 166 determine whether the installer 5011 of a program file is compatible with the child unit 2c when the child unit 2c is activated for the next time. This will be described in detail with FIG. 21. It is assumed here that the installer 5011 of the program file is compatible with the device itself; if not compatible, the rest of the steps will not be executed.
S7: if compatible, the program installation unit 163 installs the program of the program file 5005 in the device itself. The installation causes a state where the versions of the program on the child unit 2c and on the grandchild unit 2g are different, and hence, the version upgrade can be executed similarly on the grandchild unit 2g.

Therefore, the subsequent Steps S8-S12 may be substantially the same as Steps S3-S7.

### <<Process for upgrading version of program>>

FIG. 21 is an example of a flowchart illustrating detailed steps for upgrading a version of a program by an electronic whiteboard other than the parent unit. The process in FIG. 21 starts when an electronic whiteboard 2 is activated. The activation may be either one of reactivation by the setting for reactivation set on the system setting screen 601, or activation by the user.

First, the version confirmation unit 162 of the electronic whiteboard 2 determines whether the version of a program installed on the device itself is the same as the version of the program stored in the program file 5005 in the storage unit 5000 (Step S10). The "version of a program installed on the device itself" is the installed version 5004 stored in the storage unit 5000.

If it has been determined NO at Step S10, the model determination unit 166 reads out the model information 5006 of the device itself from the storage unit 5000, to determine whether the program is installable (Step S20).

Next, the model determination unit 166 determines whether the program file includes a common installer 5013. If the common installer 5013 is not included, the model determination unit 166 determines whether the program file includes an installer 5011 compatible with the model described in the model information 5006 (Step S30).

If it has been determined YES at Step S30, the electronic whiteboard 2 can execute the installer 5011, and the process goes forward to Step S60.

If it has been determined NO at Step S30, the electronic whiteboard 2 cannot execute the installer 5011 or the common installer 5013. Therefore, for example, the model determination unit 166 deletes the program file in the storage unit 5000 (Step S40). Deleting the non-executable program file stored in the storage unit 5000 leads to effective use of the storage capacity.

Next, the model determination unit 166 displays a message on the display 3 (Step S50). This message is, for example, a message like "The program is not upgradable". Upon viewing such a message, the administrator can grasp that the version of the program cannot be upgraded even though the version is different from that on the electronic whiteboard 2 immediately above.

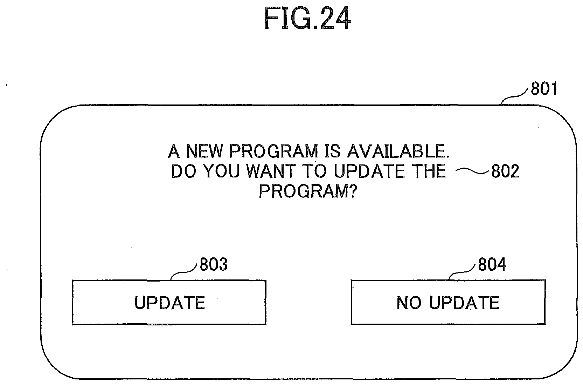

Next, the program installation unit 163 determines whether to display a dialogue as illustrated in FIG. 24 (Step S60). In other words, the program installation unit 163 determines whether the checkbox 608 has been set on the setting screen in FIG. 18B.

If it has been determined NO at Step S60, installation is executed without displaying the dialogue as illustrated in FIG. 24 (Step S80).

If it has been determined YES at Step S60, the program installation unit 163 displays the dialogue as illustrated in FIG. 24, to determine whether an operation of updating has been received from the user (Step S70). Specifically, the event classification unit 25 determines a UI operation by coordinates detected by the coordinate detection unit 22 in a state where the dialogue is displayed. The operation processing unit 26 receives an operation of updating from the user, based on the coordinates obtained with the UI operation.

If the user does not perform any operation in response to the displayed dialogue, the process ends with transitioning to a standby state if the standby time has passed, or ends with a shutdown if the shutdown time has passed.

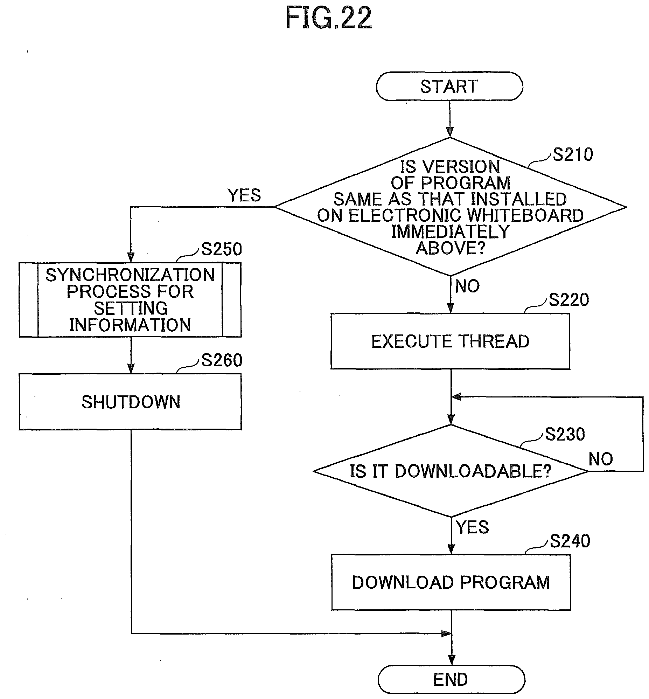

If it has been determined NO at Step S70, the program is not installed, the electronic whiteboard 2 starts activating other functions not activated yet (continues the activation process). Then, the process transitions to FIG. 22.

If it has been determined YES at Step S70, the program installation unit 163 of the electronic whiteboard 2 installs the program, by using the program file 5005 stored in the storage unit 5000 (Step S80).

Next, the program installation unit 163 copies the program file 5005 into the storage unit 2000 from the storage unit 5000, to provide the program file 5005 for an electronic whiteboard 2 immediately below (Step S90). Note that the program file 5005 of the storage unit 5000 may be provided, or this step may not be executed.

Having installed the program, the electronic whiteboard 2 reactivates itself (Step S100). This is for replacing the file which is not replaced during activation as in a general computer. The reactivation makes the process return to Step S10, and after the reactivation, it is determined YES at Step S10.

On the other hand, if it has been determined YES at Step S10, the electronic whiteboard 2 generates a thread of a process for downloading the program (Step S110). This thread describes, for example, steps how to download the program. Generating the thread makes it possible for the electronic whiteboard 2 to execute the thread repeatedly until the program can be downloaded.

Next, the process for downloading the program, and the process for having setting information synchronized will be described using FIG. 22. FIG. 22 is an example of a diagram illustrating the process executed by the electronic whiteboard 2 after activation. The process in FIG. 22 is executed after the process in FIG. 21 has been executed, and required functions have been activated.

First, the immediately-above-version determination unit 164 of an electronic whiteboard 2 determines whether the same version of the program is installed in the electronic whiteboard 2 immediately above and the device itself (Step S210). Specifically, the immediately-above-version determination unit 164 communicates with the electronic whiteboard 2 immediately above by using the communication information stored in the communication information storage unit 5002, to obtain the installed version 2004. Then, the immediately-above-version determination unit 164 compares the installed version 2004 of the electronic whiteboard 2 immediately above with the installed version 5004 of the device itself.

If it has been determined YES at Step S210, the setting information can be obtained from the electronic whiteboard 2 immediately above, and hence, the setting obtainment unit 180 of the electronic whiteboard 2 makes the setting information synchronized (Step S250). This will be described in detail later.

Once having the setting information synchronized, the electronic whiteboard 2 executes a shutdown (Step S260). The shutdown makes it possible to make settings among the setting information effective that do not become effective without reactivation.

If it has been determined NO at Step S110, the versions of the program need to be the same before having the setting information synchronized. Therefore, the program obtainment unit 165 executes the thread of the process for downloading the program (Step S220).

First, the program obtainment unit 165 determines whether the program file can be downloaded from the electronic whiteboard 2 immediately above (Step S230). The determination may be based on the following conditions.
(i) The electronic whiteboard 2 immediately above holds the program file 2005.
(ii) The electronic whiteboard 2 immediately above has set the synchronization setting effective.
(iii) The electronic whiteboard 2 immediately above has set the update setting of the program effective.

The above (i) is one of the conditions because the electronic whiteboard 2 immediately below cannot obtain the program file 2005 unless the electronic whiteboard 2 immediately above holds the program file 2005. The above (ii) is one of the conditions because the electronic whiteboard 2 immediately below cannot obtain the program file 2005 if the electronic whiteboard 2 immediately above is set not to offer the setting information. The above (iii) is one of the conditions because the electronic whiteboard 2 immediately below cannot obtain the program file 2005 if the electronic whiteboard 2 immediately above is set not to offer the program file 2005. Note that the conditions (ii) and (iii) may be omitted, and the program obtainment unit 165 may determine that the program file can be downloaded from the electronic whiteboard 2 immediately above only if the conditions (i) is satisfied.

If it has been determined NO at Step S230, the program obtainment unit 165 repeats the determination at Step S130 periodically. This makes it possible to download the program file when the program file becomes ready to be downloaded without increasing the workload of the electronic whiteboards 2 immediately above and immediately below. Note that "periodically" means intervals of several minutes to one hour, which may not be fixed. Also, it does not need to be repeated at precise intervals, and may be repeated at irregular intervals.

If it has been determined YES at Step S230, the program obtainment unit 165 downloads the program file 2005 from the electronic whiteboard 2 immediately above (Step S240). The downloaded program file 2005 is stored in the storage unit 5000 as the program file 5005 to be installed when activated for the next time.

As described above, if the installed version 2004 of the electronic whiteboard 2 immediately above is the same as the installed version 5004 of the device itself, it is possible to have the setting information synchronized. If the versions are different, it is possible to download the program file 5005 from the electronic whiteboard 2 immediately above, and to install the downloaded program file 2005 in the electronic whiteboard 2 immediately below. Thus, the same version of the program is installed in the electronic whiteboards 2 immediately above and immediately below, and hence, it is possible to have the setting information synchronized.

### <<Execution of installer>

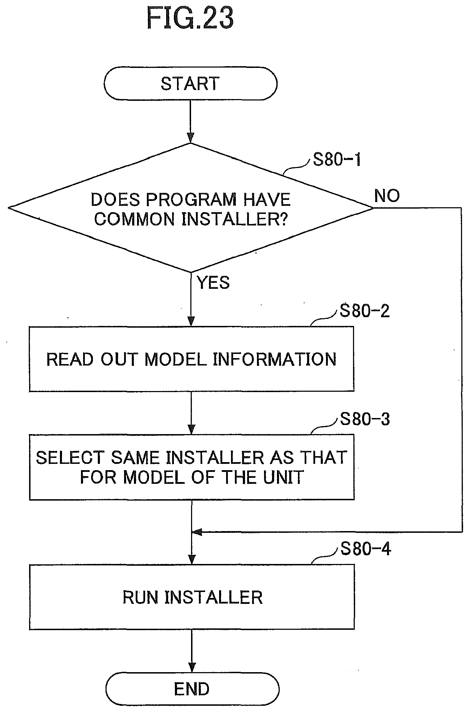

FIG. 23 illustrates an example of a flowchart illustrating steps about the selection of the installer 5011 executed at Step S80 in FIG. 21.

The program installation unit 163 of the electronic whiteboard 2 determines whether the program file has the common installer 5013 (Step S80-1).

If it has been determined NO at Step S80-1, the process goes forward to Step S80-4 because the program installation unit 163 just needs to execute the installer 5011.

If it has been determined YES at Step S80-1, in order to determine which one of the installers 5011 included in the common installer 5013 is to be executed, the program installation unit 163 reads out the model information 5006 from the storage unit 5000 (Step S80-2).

The program installation unit 163 selects the installer 5011 compatible with the model described in this model information 5006 (Step S80-3).

The program installation unit 163 executes the common installer 5013 or the installer 5011 selected at Step S80-3 (Step S80-4).

In this way, if the program file has the common installer 5013, the installer 5011 compatible with the model of the device itself can be installed.

### <<Dialogue>>

FIG. 24 is a diagram illustrating an example of a dialogue 801 displayed on the display 3 if the checkbox 608 is set on the system setting screen 601. The dialogue 801 displays a message 802 stating that "A new program is available. Do you want to update the program?", a button 803 "update", and a button 804 "not update".

If the user presses the button 803 "update", it is determined YES at Step S30 in FIG. 21, and the electronic whiteboard 2 upgrades the program. If the button 804 "not update" is pressed, it is determined NO at Step S30 in FIG. 21, and the electronic whiteboard 2 does not upgrade the program.

### <Steps for synchronizing setting information>

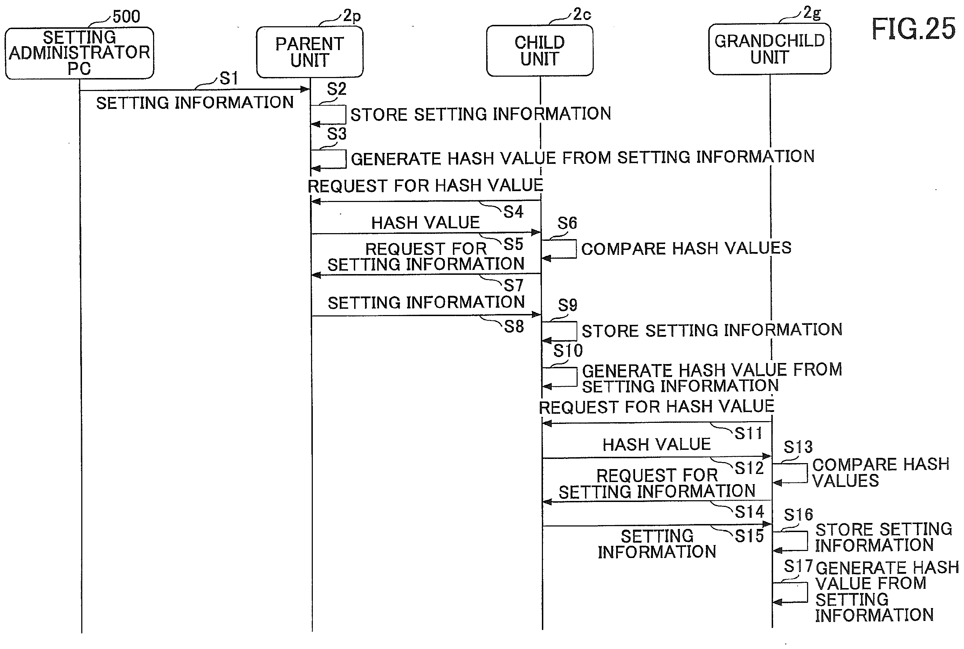

Next, steps for synchronizing the setting information will be described. FIG. 25 is an example of a sequence chart illustrating steps for synchronizing the setting information by the image processing system 1. Note that FIG. 25 illustrates a process for any one of child units 2c in the child unit layer C, and any one of grandchild units 2g in the grandchild unit layer G.
S1: As described above, the setting administrator operates a setting information screen to set the setting information on the parent unit 2p.
S2: the setting reception unit 152 of the parent unit 2p receives the setting information, to store in the setting information storage unit 2001 as the setting information for operating the main unit. The setting reception unit 152 also updates the setting information date and time.
S3: the MD generation unit 153 of the parent unit 2p generates a message digest (a hash value) from the setting information for operating the main unit, to store in the MD storage unit 2003. This makes it possible for the parent unit 2p to transmit the message digest (the hash value) to the child unit 2c.
S4: upon detecting that it is timing to have the setting information synchronized due to, for example, reactivation of the electronic whiteboard 2, the setting request unit 183 of the child unit 2c communicates with the parent unit 2p whose IP address is stored in the communication information storage unit 5002, and transmits the passcode to the parent unit 2p to log in. Having logged in successfully, the setting request unit 183 makes a request for the hash value.

Note that the electronic whiteboards 2 of the parent unit 2p and the child unit 2c need to operate under synchronization steps that are consistent with each other. Such synchronization steps will be referred to as a "protocol". The protocol has the version defined, and it is desirable for the child unit 2c to execute the synchronization process by the protocol of the same version as that executed by the parent unit 2p. Therefore, if the versions of the protocol and the passcodes are the same, respectively, the hash value is transmitted to the child unit 2c. It is assumed at Step S4 that the versions of the protocol and the passcodes are the same, respectively,

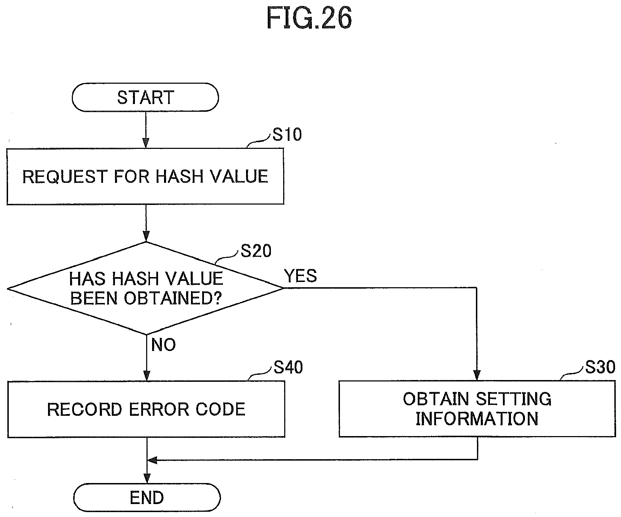

Also, if the power is turned off on the parent unit 2p, or a certain fault has occurred in the parent unit 2p, the child unit 2c cannot obtain the hash value, naturally. If the setting information cannot be obtained from the parent unit 2p for these reasons, the setting request unit 183 of the child unit 2c records an error. This will be described in detail with FIG. 26.
S5: the communication unit 151 of the parent unit 2p transmits the message digest (the hash value) stored in the MD storage unit 2003 to the child unit 2c.
S6: the setting request unit 183 of the child unit 2c receives the message digest (the hash value), and the MD comparison unit 184 compares the hash value of the parent unit 2p with the hash value stored in the MD storage unit 5003. Comparing the hash values can reduce the communication workload than comparing the entire setting information. Here, assume that the two hash values are not equivalent. The hash values not equivalent indicate that the setting information for operating the main unit has been updated on the parent unit 2p (newer than the setting information on the child unit 2c). For example, the serial numbers of the setting information may be compared instead of the hash values. In this case, the parent unit 2p or the setting administrator assigns a serial number to the setting information, and when synchronizing the setting information, the child unit 2c also synchronizes the serial number. If the serial numbers are not equivalent, the child unit 2c can determine that the setting information of the parent unit 2p has been updated. The setting information itself may be compared instead of the hash values. In this case, if the setting information is different, the child unit 2c can update the setting information as it is.

Note that the parent unit 2p may obtain the hash value of the child unit 2c, to make a comparison. In this case, although the workload of the parent unit 2p increases, if a comparison of hash values does not bring much workload, it is possible for the parent unit 2p to make the comparison.
S7: if the hash values are not equivalent, the information obtainment unit 186 of the child unit 2c makes a request for the setting information from the parent unit 2p. Since the setting information is not requested unless the hash values are not equivalent, it is possible to avoid increasing the workload of the parent unit 2p and the child unit 2c.
S8: the communication unit 151 of the parent unit 2p transmits the setting information for operating the main unit read out of the setting information storage unit 2001 to the child unit 2c.
S9: the communication unit 181 of the child unit 2c receives the setting information, and the information obtainment unit 186 stores the setting information obtained from the parent unit 2p as the setting information for operating the main unit in the setting information storage unit 5001. The communication unit 181 also updates the setting information date and time.
S10: the MD generation unit 187 of the child unit 2c generates a message digest (a hash value) from the setting information, to store in the MD storage unit 5003. This makes it possible for the child unit 2c to transmit the message digest (the hash value) to a grandchild unit 2g.

By the process as described above, the setting information of the parent unit 2p and the child unit 2c are synchronized. Next, if the setting request unit 183 of a grandchild unit 2g detects that it is timing to have the setting information synchronized, the grandchild unit 2g executes the same steps as the child unit 2c as illustrated in Steps S11-S17.

Thus, the electronic whiteboard 2 immediately below just needs to execute a process for updating its own setting information, which can reduce the workload of the electronic whiteboards 2 compared to a case where the electronic whiteboard 2 immediately above sets the setting information to multiple electronic whiteboards 2 immediately below.

Note that timing at which the grandchild unit 2g obtains the setting information delays by one cycle than the timing for the child unit 2c. This is because when the grandchild unit 2g is activated, the child unit 2c is in the middle of executing the process for synchronizing the setting information, and hence, the hash values are equivalent, and the grandchild unit 2g determines that no synchronization is required. Therefore, if synchronization is to be executed once every day (the electronic whiteboard 2 is reactivated once every day), the timing at which the grandchild unit 2g obtains the setting information delays by one day than the timing for the child unit 2c. However, under such synchronization with delayed timing, each electronic whiteboard 2 does not need to execute the synchronization of the device itself at the same timing to transmit the setting information to an electronic whiteboard 2 immediately below. Therefore, it is easier to prevent the workload from becoming high. If such a synchronization delay causes inconvenience, the setting administrator may set multiple times of automatic reactivation per day, or the user and the setting administrator may manually perform reactivation.

### <<Operational steps of child unit>>

FIG. 26 is an example of a flowchart illustrating steps for updating the setting information by the electronic whiteboard 2 immediately below. FIG. 26 mainly illustrates Step S4 in FIG. 25.

As described above, the setting request unit 183 of the child unit 2c makes a request for the hash value to the parent unit 2p (Step S10). In response to this request, the communication unit 151 of the parent unit 2p transmits the hash value or an error code depending on the content of an error, to the child unit 2c. Therefore, the child unit 2c can obtain the hash value or the error code.

The setting request unit 183 of the child unit 2c determines whether the hash value has been obtained (Step S20). If the hash value has been obtained (YES at Step S20), the information obtainment unit 186 of the child unit 2c obtains the setting information as described above (Step S30).

If the hash value has not been obtained (NO at Step S20), the setting request unit 183 of the child unit 2c records the error code on the storage unit 5000 (Step S40). Error codes include the following types.
* 400 -- The versions of the protocol are not equivalent.
* 401 -- the passcodes are not equivalent. Also, if the parent unit 2p does not respond (due to the power-off or the like), the setting request unit 183 of the child unit 2c records an error code 402 meaning no response. Thus, the error code display unit 188 can display an error code on the display 3 of the electronic whiteboard 2 or on the setting administrator PC 500.

### <Displaying error code>

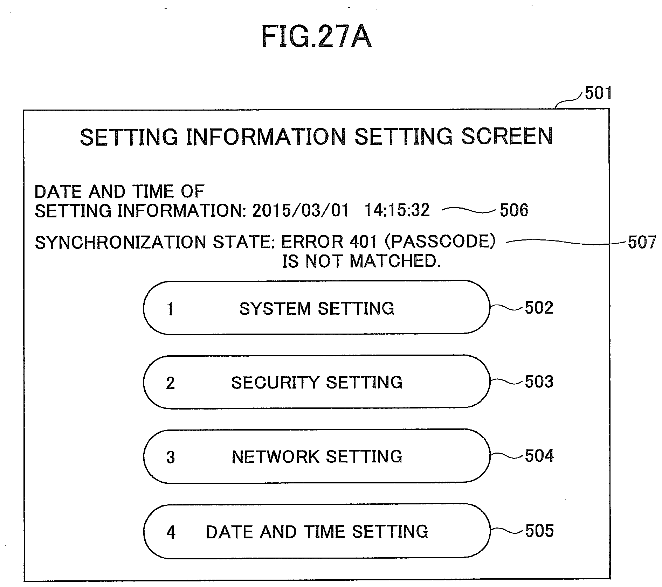

FIG. 27A is a diagram illustrating an example of the setting information setting screen 501 displayed on the display of the setting administrator PC 500. Note that different points from FIG. 18A will be described with FIG. 27A. The error code display unit 188 displays setting information date and time 506 and a synchronization state 507 stored in the setting information storage unit 5001, on the setting information setting screen 501. Viewing the synchronization state displayed as an error, the setting administrator can grasp that the synchronization has failed. Also, the setting administrator can also grasp the reason why the synchronization has failed as the error code (the content of the error) is displayed.

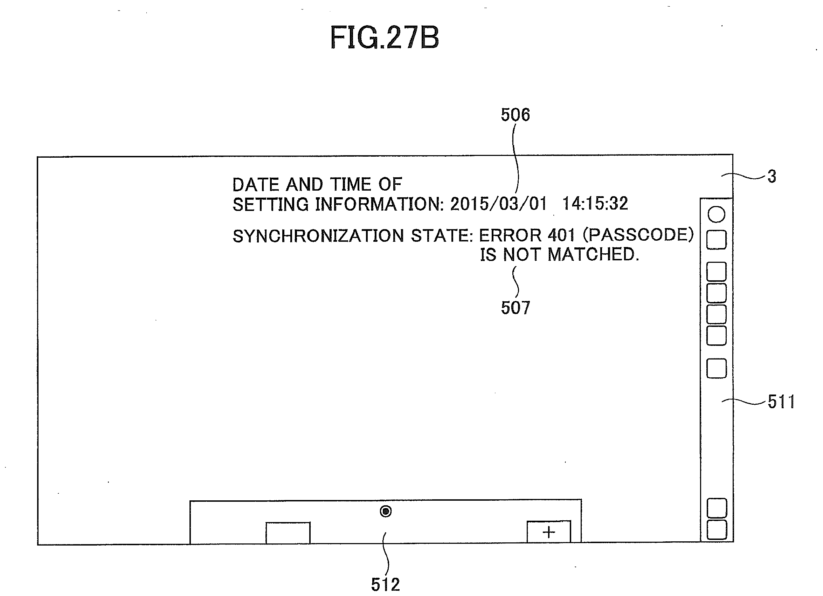

FIG. 27B is a diagram illustrating an example of an error code displayed on the display 3 of the electronic whiteboard 2. A tool icon field 511 including icons for handwriting, an eraser, and the like, and a page tool field 512 for switching the page and the like, are displayed on the display 3 of the electronic whiteboard 2. Along with these, the error code display unit 188 of the electronic whiteboard 2 displays the setting information date and time 506 and the synchronization state 507 stored in the setting information storage unit 5001, for example, at the upper right of the display 3.

As for the timing for displaying, it may be displayed for several seconds immediately after reactivation of the electronic whiteboard 2, which may hardly hinder the user to use the electronic whiteboard 2. Since the user notifies the setting administrator that the error code has been displayed, the setting administrator can know the synchronization has failed, and can investigate the reason why the synchronization has failed.

As described above, the image processing system 1 according to the embodiment repeats synchronization of the setting information between each pair of an electronic whiteboards 2 immediately below and an electronic whiteboard 2 immediately above, to have the setting information synchronized among all the electronic whiteboards 2.

Note that instead of setting the setting information on the electronic whiteboard 2 at the top of the tree structure, the setting administrator may set the setting information on an electronic whiteboard 2 positioned relatively lower than the parent unit 2p. In this case, the setting information can be synchronized for electronic whiteboards 2 relatively lower than the electronic whiteboard 2 on which the setting administrator has set the setting information. Also, there may be two or more parent units 2p at the level of the parent unit 2p. In this case, the setting administrator sets the setting information on each of the two or more parent units 2p.

### <Recommendation of common installer>

If the common installer 5013 is compatible with the models of all the electronic whiteboards 2 in the network structure, the parent unit 2p having the common installer 5013 can upgrade all the electronic whiteboards 2 at relatively lower levels.

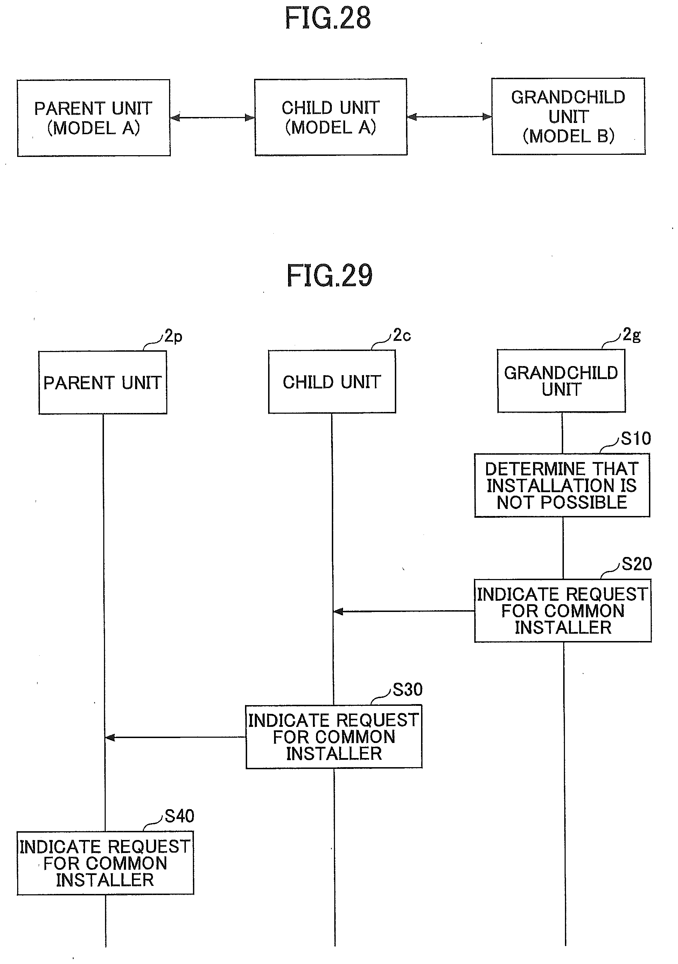

For example, consider a situation as illustrated in FIG. 28. FIG. 28 illustrates an example of models of the parent unit 2p, the child unit 2c, and the grandchild unit 2g. The parent unit 2p and the child unit 2c are of models A, whereas the grandchild unit 2g is of model B. Therefore, the parent unit 2p and the child unit 2c can upgrade a program by the installer 5011 for model A, but the grandchild unit 2g cannot upgrade the program with the installer 5011. In this case, in addition to displaying a message on the grandchild unit 2g, if a message recommending installing the common installer 5013 on the parent unit 2p, the administrator can cope with this situation of the grandchild unit 2g being not capable of upgrading the program, only by looking after the parent unit 2p. Thus, the parent unit 2p, the child unit 2c, and the grandchild unit 2g operate as follows.

FIG. 29 is an example of a flowchart illustrating steps for having the parent unit 2p display a request for the common installer 5013.

First, the model determination unit 166 of the grandchild unit 2g determines that the installer 5011 cannot be executed (Step S10). This step has been described with Step S30 in FIG. 21.

It has been determined NO at Step S10 because the common installer 5013 is not included in the program file. Therefore, the model determination unit 166 indicates a request for the common installer 5013 to the child unit 2c immediately above (Step S20).

The communication unit 181 of the child unit 2c indicates a request for the common installer 5013 to the parent unit 2p (Step S30).

The communication unit 181 of the parent unit 2p receives the request for the common installer 5013, and the parent unit 2p displays the request for the common installer 5013 on the display 3 (Step S40). The parent unit 2p displays a message, for example, "There is an electronic whiteboard that cannot upgrade the program in the network structure. Please install the common installer 5013." Therefore, if any one of the electronic whiteboards 2 in the network structure cannot upgrade the program, the parent unit 2p can display the message prompting the setting of the common installer 5013.

### <Other application examples>

As above, most preferable embodiments have been described. Note that the present invention is not limited to these embodiments, but various variations and modifications may be made without departing from the scope of the present invention.

So far, the synchronization process has been described with the setting information of the electronic whiteboards 2 taken as the example in the embodiment. However, apparatuses other than the electronic whiteboards 2 may update the setting information. For example, the embodiments are applicable to projectors, image forming apparatuses (copy machines, printers, scanners, MFPs (Multi-Function Peripherals), video conference terminals, and the like.

Also, although the embodiments have been described with examples of the setting information to be synchronized, the setting information is not limited to the examples described above. For example, the setting information may include print settings for printing on a printer connected with the electronic whiteboard 2 (with or without print authentication, with or without a password, with or without encryption, etc.); settings for the area and language; settings about management of registration data (settings about read and write permission for information held in the electronic whiteboard 2); settings about a color profile; and user information of users of the electronic whiteboard 2 (usernames, and destinations of e-mail transmitted by the electronic whiteboards 2 such as mail addresses). Also, if apparatuses other than electronic whiteboards 2 are to be synchronized, information specific the apparatuses may be synchronized.

Also, the example configuration as illustrated in FIG. 16 or 17 includes functional units partitioned based on main functions, to make it easy to understand processes executed by the electronic whiteboard 2. Note that the present invention is not limited by such specific partitioning of functional units and their names. The processes by the electronic whiteboard 2 may be further partitioned into more functional units depending on contents of processing. Also, partitioning may be done such that each functional unit includes furthermore contents of processing.

Also, one or more storage units illustrated in the storage units 2000 and 5000 in FIGs. 16 and 17 may exist on a network.

Note that the program obtainment unit 165 is an example of an obtainment unit; the model determination unit 166 is an example of a first determination unit; the program installation unit 163 is an example of an introduction unit; the immediately-above-version determination unit 164 is an example of a second determination unit; the information obtainment unit 186 is an example of a setting information obtainment unit; the storage unit 2000 is an example of a storage unit; the version confirmation unit 162 is an example of a third determination unit; the parent unit 2p is an example of another electronic whiteboard; and a grandchild unit 2g is an example of a second electronic whiteboard. The communication information storage unit 5002 is an example of a communication information storage unit; a stroke image is an example of visual information; and the display 3 is an example of a display device.

### [Related-Art Documents]

### [Patent Documents]

[Patent Document 1] Japanese patent No. 4942686

## Claims

1. An electronic whiteboard that displays visual information on a display device depending on an input position on a screen, the electronic whiteboard comprising:
a communication information storage unit configured to store communication information for communicating with another electronic whiteboard;
an obtainment unit configured to communicate with the other electronic whiteboard by using the communication information, and to obtain a program providing a function of the electronic whiteboard, and a common introduction program common to models of the electronic whiteboard for introducing the program; and
an introduction unit configured to execute the common introduction program, and to introduce the program in the electronic whiteboard.

2. The electronic whiteboard according to claim 1, wherein the obtainment unit obtains an introduction program which is one of the common introduction program and an individual introduction program for introducing the program, the individual introduction program different from the common introduction program, the electronic whiteboard further comprising:
a first determination unit configured to determine whether the introduction program obtained by the obtainment unit is the common introduction program,
wherein in a case where the first determination unit has determined that the common introduction program has been obtained, the introduction unit executes the common introduction program to introduce the program in the electronic whiteboard.

3. The electronic whiteboard according to claim 2, wherein the electronic whiteboard stores model information about the model of the electronic whiteboard,
wherein the first determination unit compares the model information with information about a model which the introduction program is compatible with, and in a case where the introduction program is compatible with the model of the electronic whiteboard, determines that the introduction program can be executed even if the introduction program is not the common introduction program.

4. The electronic whiteboard according to claim 2 or 3, further comprising:
a second determination unit configured to communicate with the other electronic whiteboard by using the communication information, and to determine whether a version of the program introduced in the electronic whiteboard is equivalent to a version of the program introduced in the other electronic whiteboard,
wherein in a case where the second determination unit has determined that the versions of the program are not equivalent, the obtainment unit obtains the introduction program and the program from the other electronic whiteboard.

5. The electronic whiteboard according to claim 4, further comprising:
a setting information obtainment unit configured to obtain setting information about an operation of the electronic whiteboard from the other electronic whiteboard by using the communication information,
wherein in a case where the second determination unit has determined that the versions of the program are equivalent, the setting information obtainment unit obtains the setting information from the other electronic whiteboard.

6. The electronic whiteboard according to claim 3, further comprising:
a storage unit configured to store the program and the introduction program obtained by the obtainment unit,
wherein in a case where the introduction program is not the common introduction program and not compatible with the model of the electronic whiteboard, the first determination unit deletes the program and the introduction program stored in the storage unit.

7. The electronic whiteboard according to claim 6, further comprising:
a third determination unit configured to determine whether a version of the program stored in the storage unit is equivalent to the version of the program introduced in the other electronic whiteboard,
wherein in a case where the third determination unit has determined that the two versions of the program are not equivalent, the first determination determines whether the introduction program obtained by the obtainment unit is the common introduction program.

8. The electronic whiteboard according to any one of claims 3 to 7,
wherein the electronic whiteboard is connected with a second electronic whiteboard being different from the other electronic whiteboard,
wherein in a case where the first determination unit of the second electronic whiteboard determines that the introduction program is not the common introduction program and not compatible with the model of the electronic whiteboard, the electronic whiteboard receives a request for the common introduction program from the second electronic whiteboard, to make the other electronic whiteboard display the request for the common introduction program.

9. The electronic whiteboard according to any one of claims 2 to 8,
wherein the electronic whiteboard stores model information about the model of the electronic whiteboard,
wherein the common introduction program includes the individual introduction program for each of the models of the electronic whiteboard,
wherein in a case where the introduction program is the common introduction program, the introduction unit selects one of the individual introduction programs included in the common introduction program based on the model information, to execute the selected one of the individual introduction programs for introducing the program in the electronic whiteboard.

10. A system including an electronic whiteboard that displays visual information on a display device depending on an input position on a screen, and communicates with another electronic whiteboard, the system comprising:
a communication information storage unit configured to store communication information for communicating with the other electronic whiteboard;
an obtainment unit configured to communicate with the other electronic whiteboard by using the communication information, and to obtain a program providing a function of the electronic whiteboard, and a common introduction program common to models of the electronic whiteboard, for introducing the program; and
an introduction unit configured to execute the common introduction program, and to introduce the program in the electronic whiteboard.

11. A method for processing executed by a system including an electronic whiteboard that displays visual information on a display device depending on an input position on a screen, and communicates with another electronic whiteboard, the method comprising:
communicating with the other electronic whiteboard by using communication information in a communication information storage unit storing the communication information for communicating with the other electronic whiteboard, and obtaining a program providing a function of the electronic whiteboard and a common introduction program common to models of the electronic whiteboard, for introducing the program; and
executing the common introduction program to introduce the program in the electronic whiteboard.
